(19) Europäisches Patentamt
European Patent Office
Office européen des brevets

(11) **EP 3 339 836 B1**

(12) **FASCICULE DE BREVET EUROPEEN**

(45) Date de publication et mention
de la délivrance du brevet:
**05.05.2021 Bulletin 2021/18**

(51) Int Cl.:
***G01N 17/00*** *(2006.01)*       ***F28F 19/00*** *(2006.01)*
***F28F 27/00*** *(2006.01)*

(21) Numéro de dépôt: **17209132.4**

(22) Date de dépôt: **20.12.2017**

(54) **SYSTÈME ET PROCÉDÉ D'ÉVALUATION D'AU MOINS UNE CONDITION DE FONCTIONNEMENT D'UN ÉCHANGEUR DE CHALEUR**

SYSTEM UND VERFAHREN ZUR EINSCHÄTZUNG MINDESTENS EINER BETRIEBSBEDINGUNG EINES WÄRMETAUSCHERS

SYSTEM AND METHOD FOR EVALUATING AT LEAST ONE OPERATING CONDITION OF A HEAT EXCHANGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663012**

(43) Date de publication de la demande:
**27.06.2018 Bulletin 2018/26**

(73) Titulaire: **Commissariat à l'Energie Atomique et aux Energies Alternatives 75015 Paris (FR)**

(72) Inventeurs:
• **MINVIELLE, Zoé**
  **38000 GRENOBLE (FR)**
• **DUCROS, Frédéric**
  **38120 FONTANIL (FR)**
• **MEMPONTEIL, Alain**
  **38600 FONTAINE (FR)**

(74) Mandataire: **Bronchart, Quentin Cabinet Hautier 20, rue de la Liberté 06000 Nice (FR)**

(56) Documents cités:
WO-A1-2007/099240      WO-A1-2009/153323
JP-A- 2010 091 181      US-A1- 2015 204 733

**Description**

DOMAINE TECHNIQUE DE L'INVENTION

L'invention concerne le domaine des dispositifs et procédés sièges de transferts thermiques où les parois peuvent, à certains moments, être l'objet de phénomènes d'encrassement ou de dégradation, par exemple par perte de matière liée à leur corrosion ou par oxydation. Sont concernés l'industrie chimique, le secteur de l'énergie, incluant le secteur pétrolier, le secteur de l'agro-alimentaire, le secteur des transports, l'industrie du froid, de la climatisation, etc.

L'invention concerne plus particulièrement un dispositif et un procédé d'évaluation des conditions de fonctionnement d'un échangeur de chaleur incluant tout type de technologies, tel qu'un condenseur, un évaporateur, un échangeur-réacteur, etc.

ÉTAT DE LA TECHNIQUE

La simple mesure de quantités physiques en entrée et en sortie d'un échangeur thermique (mesures de pression et de température, mesure du débit) permet de remonter à la performance moyenne globale du transfert thermique dans l'échangeur thermique. Toutefois, cela ne permet pas d'avoir des indications sur la qualité du transfert thermique local et en particulier de détecter une perte d'efficacité locale, par exemple due à un encrassement local d'une paroi de transfert thermique.

Pour obtenir ce type d'indications locales, il faut mettre en oeuvre des dispositifs de mesures locaux.

De nombreux dispositifs comprenant une sonde de température sont dédiés à la mesure directe ou indirecte des flux thermiques locaux et/ou de températures locales et, par là même, permettent de remonter au coefficient d'échange thermique local, et donc de donner des indications sur les conditions de fonctionnement locales des échangeurs thermiques. Trois dispositifs de ce type sont discutés ci-dessous.

Le document WO 01/94876 A1 propose notamment un dispositif et un procédé pour suivre l'encrassement d'une cuve de combustion d'un échangeur-réacteur à énergie fossile. Selon cette méthode, on évalue une valeur de résistance d'un réseau en matériau conducteur qui est par exemple constitué par les parois des tubes d'un échangeur. A cet effet, ce réseau est soumis à un ou plusieurs signaux électriques donnés. La valeur de résistance ainsi calculée est comparée à une valeur de résistance nominale déterminée sur le même réseau à un instant de référence antérieur. Si la valeur de résistance ainsi obtenue est supérieure à la valeur de résistance nominale, on considère qu'il y a encrassement. Cette solution a en particulier l'inconvénient de ne pouvoir être utilisée qu'avec une contribution des phénomènes de convection thermique (fonctionnement du réacteur à un débit en énergie fossile et à une température de la cuve donnés) qui est celle avec laquelle la mesure de la valeur de résistance nominale a été mesurée.

Le document WO 2007/099240 A1 divulgue un échangeur thermique à plaques empilées incluant un dispositif d'évaluation de son état d'encrassement. Ce dispositif d'évaluation comporte une résistance électrique, qui est thermiquement reliée à la plaque située à l'extrémité de l'empilement et qui est destinée à être parcourue par un courant électrique paramétré pour amplifier le flux de chaleur véhiculé au sein de l'échangeur. Le dispositif d'évaluation comporte également des moyens de mesure de la température (thermocouples) au voisinage direct de ladite résistance électrique. La mesure locale de la température permet de comparer l'évolution de la température au voisinage de la résistance, avec des profils de référence. En fonction de l'écart par rapport aux profils de référence, il est possible de déduire des modifications de capacité calorifique de la plaque. Ces modifications étant fonction de l'encrassement de la plaque, le dispositif permet d'évaluer cet encrassement. Cette solution a en particulier l'inconvénient de modifier temporairement l'échange thermique local. D'autre part, le fait que la mesure de température est réalisée à l'opposé de la surface où est généré le flux supplémentaire rend complexe l'interprétation de cette mesure car elle n'est impactée que par la propagation de la perturbation du flux et non par l'augmentation du flux elle-même.

Le document WO 2009/153323 A1 divulgue un dispositif et un procédé pour la détection et/ou la mesure de l'encrassement dans un échangeur thermique. Le procédé consiste à mesurer la valeur résistive d'une sonde de température disposée au niveau d'une paroi de l'échangeur. Plus particulièrement, pendant deux durées successives, la résistance est soumise à deux niveaux de puissance constante. Le premier niveau de puissance P1, choisi de sorte que le flux de chaleur provoqué par effet Joule ait une influence sur la paroi de l'échangeur et non sur la couche d'encrassement lorsqu'elle existe, est inférieur au second niveau de puissance P2 qui est choisi de sorte que le flux de chaleur provoqué par effet Joule ait un impact à la fois sur la paroi de l'échangeur et sur la couche d'encrassement lorsqu'elle existe. Les durées d'application des puissances et leur enchaînement sont choisis de manière à s'assurer de la stabilité des conditions de fonctionnement et à atteindre un régime thermique stationnaire à la fin de l'application des puissances P1 et P2. Des mesures de valeurs résistives sont respectivement effectuées à la fin de l'application des puissances. La différence des mesures de valeurs résistives constitue alors une mesure de la résistance thermique de la couche d'encrassement. Par conséquent, la différence des mesures de valeurs résistives constitue une valeur caractéristique du niveau d'encrassement de la paroi de l'échangeur.

Les trois dispositifs discutés ci-dessus sont dédiés à la mesure de températures locales et/ou de flux thermiques locaux et, par là même, permettent de remonter au coefficient d'échange thermique local, et donc d'évaluer les conditions de fonctionnement locales d'un échangeur thermique. Toutefois, chacune de ces évaluations nécessite de faire des hypothèses fortes sur l'environnement thermique de la sonde de température pour extraire, des mesures physiques, la valeur locale du coefficient d'échange. Par ailleurs, aucune de ces évaluations ne permet de discriminer de quel côté de la paroi se situe l'encrassement. En outre, une fois la valeur locale du coefficient d'échange obtenue, il n'est pas possible, si les termes de convection varient, d'identifier les contributions respectives des phénomènes de convection et de conduction (dans les parois et dans les éventuelles couches d'encrassement) parmi les diverses contributions au coefficient d'échange.

Un objet de la présente invention est de répondre, au moins en partie, aux limitations précédemment exposées.

Les autres objets, caractéristiques et avantages de la présente invention apparaîtront à l'examen de la description suivante et des dessins d'accompagnement. Il est entendu que d'autres avantages peuvent être incorporés.

## RÉSUMÉ DE L'INVENTION

Pour atteindre cet objectif, selon un premier aspect, la présente invention prévoit un système d'évaluation d'au moins une condition de fonctionnement d'un échangeur de chaleur, comprenant :

- au moins deux bi-sondes de température comprenant chacune un empilement de deux mono-sondes de température thermiquement et électriquement isolées entre elles, et
- une paroi d'un échangeur thermique à travers laquelle un transfert thermique est destiné à s'opérer entre deux fluides $f$ et $f'$ circulant de part et d'autre de la paroi et sur laquelle est susceptible de se déposer un encrassement.

Chaque mono-sonde de chaque bi-sonde est destinée à être reliée fonctionnellement à :

- un dispositif d'alimentation électrique de chaque mono-sonde, et
- un dispositif de mesure de courant électrique dans chaque mono-sonde.

Un dispositif de supervision est prévu pour contrôler le fonctionnement du dispositif d'alimentation et du dispositif de mesure. Chaque mono-sonde est en outre destinée à être reliée au dispositif de supervision, le cas échéant via au moins l'un parmi le dispositif d'alimentation et le dispositif de mesure.

Chaque bi-sonde est disposée, indépendamment de l'autre bi-sonde, sur l'un parmi un premier côté et un second côté de la paroi de l'échangeur de chaleur.

Une première bi-sonde est située à une première hauteur $h_1$ de circulation des fluides $f$ et $f'$ et une deuxième bi-sonde est située à une deuxième hauteur $h_2$ de circulation des fluides $f$ et $f'$, la première hauteur $h_1$ étant différente de la deuxième hauteur $h_2$.

Chaque bi-sonde présente une résistance thermique $Rs_1$, $Rs_2$ connue. La paroi présente une résistance thermique Rp connue. L'échangeur thermique présente des paramètres géométriques connus.

Chaque mono-sonde a deux fonctions, celle de dissipateur thermique et celle de mesure résistive de température.

Chaque bi-sonde du système selon le premier aspect de l'invention comprend un empilement de deux mono-sondes séparées par une couche thermiquement isolante. Cette couche crée une résistance thermique entre les deux mono-sondes, afin que les températures d'équilibre des mono-sondes puissent être indépendantes ou du moins différentes l'une de l'autre, en particulier lorsque l'on applique des courants électriques d'intensités différentes aux circuits résistifs. De la sorte, chaque bi-sonde permet d'associer des flux thermiques la traversant à des écarts de température, ou à des écarts d'évolution de température, entre les deux mono-sondes.

Chaque bi-sonde du système selon le premier aspect de l'invention permet d'évaluer, à l'une correspondante des hauteurs de circulation $h_1$ et $h_2$, au moins l'une des conditions de fonctionnement suivantes :

- la température $Tf$ du fluide $f$ circulant du premier côté de la paroi,
- la température $Tf'$ du fluide $f'$ circulant du second côté de la paroi,
- la résistance thermique R du premier côté de la paroi, et
- la résistance thermique $R'$ du second côté de la paroi.

Du fait que chacune des résistances thermiques $R$ et $R'$ est proportionnelle à une somme de résistances thermiques de convection et éventuellement d'encrassement $Rcv+Re$ et $R'cv+R'e$, chaque bi-sonde du système selon le premier aspect de l'invention permet d'évaluer en outre au moins l'une des conditions de fonctionnement suivantes :

- la présence ou non d'un encrassement du premier côté de la paroi, et
- la présence ou non d'un encrassement du second côté de la paroi.

Ces premières évaluations de conditions de fonctionnement de l'échangeur de chaleur permettent encore d'évaluer d'autres conditions de fonctionnement de l'échangeur de chaleur selon le procédé introduit ci-dessous relatif à un deuxième aspect de l'invention.

Le deuxième aspect de la présente invention concerne effectivement un procédé d'évaluation d'au moins une condition de fonctionnement d'un échangeur de chaleur. Le procédé met en oeuvre un système d'évaluation tel qu'introduit ci-dessus, destiné à opérer un transfert thermique entre deux fluides $f$ et $f'$. Au moins l'un des fluides $f$ et $f'$ présente des propriétés physiques connues.

Le procédé selon le deuxième aspect de l'invention comprend les étapes suivantes, mises en oeuvre en utilisant les dispositifs d'alimentation, de mesure et de supervision :

- une première étape de détermination, à l'aide de la première bi-sonde et en fonction de la résistance thermique $Rs_1$ de la première bi-sonde et de la résistance thermique Rp de la paroi, d'au moins les conditions de fonctionnement suivantes : la température $Tf_1$ du fluide $f$ du premier côté de la paroi et la température $Tf'_1$ du fluide $f'$ du second côté de la paroi, à la première hauteur $h_1$ de circulation, et
- une deuxième étape de détermination, à l'aide de la deuxième bi-sonde et en fonction de la résistance thermique $Rs_2$ de la deuxième bi-sonde et de la résistance thermique Rp de la paroi, d'au moins les conditions de fonctionnement suivantes : la température $Tf_2$ du fluide $f$ du premier côté de la paroi, la température $Tf'_2$ du fluide $f'$ du second côté de la paroi, la résistance thermique $R_2$ du premier côté de la paroi et la résistance thermique $R'_2$ du second côté de la paroi, à la deuxième hauteur $h_2$ de circulation.

Le procédé comprend en outre :

- une étape de calcul mise en oeuvre par le dispositif de supervision, au moins en fonction des conditions de fonctionnement précédemment déterminées, des paramètres géométriques de l'échangeur thermique et des propriétés physiques d'au moins l'un des fluides $f$ et $f'$, d'au moins l'une parmi les conditions de fonctionnement respectives suivantes :
- un débit massique du fluide $f$, une résistance de convection $Rcv$ et une résistance d'encrassement Re du premier côté de la paroi, et
- un débit massique du fluide $f'$, une résistance de convection $R'cv$ et une résistance d'encrassement R'e du second côté de la paroi.

Par hypothèse d'évolution continue et d'uniformité ou de variation linéaire des résistances thermiques entre les valeurs mesurées aux hauteurs de circulation $h_1$ et $h_2$ des fluides $f$ et $f'$, et par application des principes de conservation de l'énergie entre ces deux hauteurs de circulation, le procédé selon le deuxième aspect de l'invention permet de relier algébriquement le flux thermique traversant la paroi aux débits massiques $Q_m$ et $Q'_m$ des fluides $f$ et $f'$ circulant de part et d'autre de la paroi. Connaissant les caractéristiques physiques des fluides $f$ et $f'$ (et notamment la masse volumique et la capacité calorifique de chaque fluide $f$ et $f'$), les valeurs des débits massiques $Q_m$ et $Q'_m$ donnent accès aux régimes d'écoulement de chaque côté de la paroi et donc à une évaluation des résistances de convection $Rcv, R'cv$ de part et d'autre de la paroi. Ceci permet d'isoler la contribution, à la résistance thermique globale, des résistances d'encrassement $Re, R'e$ de chaque côté de la paroi.

Un troisième aspect de la présente invention concerne un produit programme d'ordinateur comprenant des instructions, qui, lorsqu'elles sont interprétées et exécutées par au moins un processeur, par exemple du dispositif de supervision, effectuent au moins les première et deuxième étapes de détermination et l'étape de calcul du procédé concerné par le deuxième aspect de l'invention. En variante, le troisième aspect de la présente invention concerne un média non-transitoire lisible par un ordinateur, comprenant des instructions, qui, lorsqu'elles sont interprétées et exécutées par au moins un processeur, par exemple du dispositif de supervision, effectuent au moins les première et deuxième étapes de détermination et l'étape de calcul du procédé concerné par le deuxième aspect de l'invention.

Un autre objet de l'invention concerne une bi-sonde en tant que telle.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La FIGURE 1 est une représentation schématique en perspective d'un circuit résistif d'une mono-sonde de chaque bi-sonde selon un aspect de l'invention ;

La FIGURE 2 est une représentation schématique en perspective d'une mono-sonde de chaque bi-sonde selon un aspect de l'invention ;

La FIGURE 3 est une représentation schématique en perspective d'un assemblage de chaque bi-sonde selon un aspect de l'invention ;

La FIGURE 4 est une représentation schématique en perspective de chaque bi-sonde selon un aspect de l'invention ;

La FIGURE 5 représente la bi-sonde de la FIGURE 4 à laquelle ont été connectés un dispositif d'alimentation électrique et un dispositif de mesure de courant électrique ;

La FIGURE 6 représente un système selon le premier aspect de l'invention ;

La FIGURE 7 représente schématiquement une vue en coupe transversale des deux bi-sondes telles qu'illustrées sur la FIGURE 6 disposées sur la paroi de l'échangeur thermique ;

La FIGURE 8 est identique à la figure 7 et comprend en outre des illustrations des notations employées dans les équations ci-dessous ;

La FIGURE 9 est un ordinogramme détaillant un mode de réalisation de certaines étapes du procédé selon le deuxième aspect de l'invention ; et

La FIGURE 10 est un ordinogramme de différentes étapes du procédé selon le deuxième aspect de l'invention.

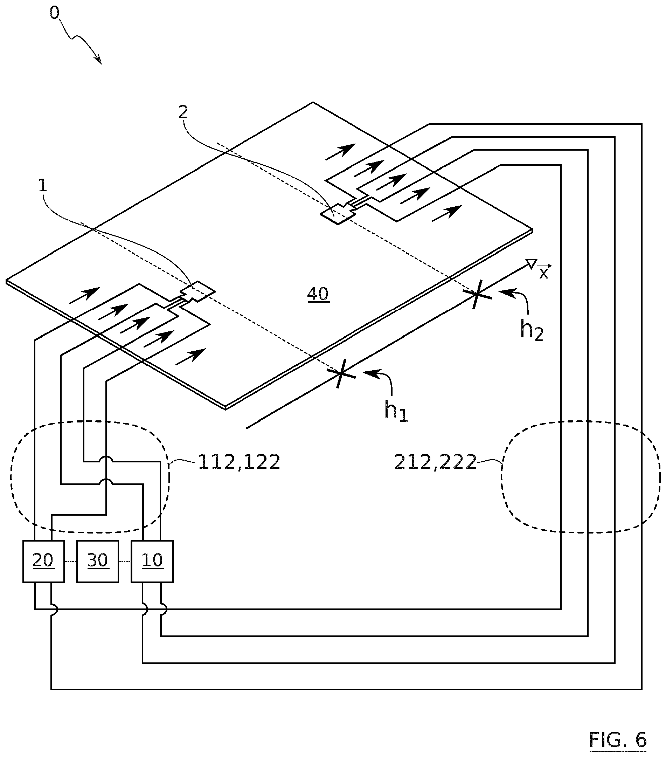

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives des différents éléments du système selon l'invention tels qu'illustrés sur la figure 6 ne sont pas représentatives de la réalité.

## DESCRIPTION DÉTAILLÉE DE L'INVENTION

Avant d'entamer une revue détaillée de modes de réalisation de l'invention, sont énoncées ci-après des caractéristiques optionnelles du procédé selon le deuxième aspect de l'invention, qui peuvent éventuellement être utilisées en association ou alternativement :

- la deuxième étape de détermination comprend en outre la détermination, à l'aide de la première bi-sonde et en fonction de la résistance thermique $Rs_1$ de la première bi-sonde et de la résistance thermique Rp de la paroi, de la résistance thermique $R_1$ du premier côté de la paroi et de la résistance thermique $R'_1$ du second côté de la paroi, à la première hauteur $h_1$ de circulation, en tant que conditions de fonctionnement. Dès lors, l'étape de calcul est réalisée en outre en fonction de la résistance thermique $R_1$ et de la résistance thermique $R'_1$. Plus particulièrement, l'étape de calcul peut :

  ○ être réalisée en fonction d'une moyenne des résistances thermiques $R_1$ et $R_2$ et d'une moyenne des résistances thermiques $R'_1$ et $R'_2$. Le procédé selon cette particularité est adapté au cas où la somme des résistances thermiques de part et d'autre de la paroi varie faiblement en fonction de la hauteur de circulation des fluides $f$ et $f'$ ; ou
  ○ être paramétrée par extrapolation, de préférence linéaire, d'une évolution de résistance thermique entre les hauteurs $h_1$ et $h_2$ d'au moins un côté de la paroi en fonction des valeurs correspondantes parmi : les résistances thermiques $R_1$ et $R_2$ et les résistances thermiques $R'_1$ et $R'_2$. Le procédé selon cette particularité est adapté au cas où la somme des résistances thermiques d'un côté ou de l'autre de la paroi est susceptible de varier en fonction de la hauteur de circulation des fluides $f$ et $f'$ ;

- la différence entre les hauteurs $h_1$ et $h_2$ auxquelles sont respectivement situées les première et deuxième bi-sondes est paramétrée de sorte que des différences de températures $Tf_1$-$Tf_2$ du fluide $f$ et $Tf'_1$-$Tf'_2$ du fluide $f'$ entre les hauteurs $h_1$ et $h_2$ soient perceptibles par le dispositif de mesure comme une différence de mesures de courant au moins entre une mono-sonde de la première bi-sonde et une mono-sonde de la deuxième bi-sonde ;
- les propriétés physiques de chaque fluide $f$, $f'$ comprennent la capacité calorifique et le cas échéant la masse volumique, la conductivité thermique et la viscosité dynamique ;
- les paramètres géométriques de l'échangeur thermique comprennent une surface d'échange thermique comprise entre les hauteurs $h_1$ et $h_2$ et le cas échéant un diamètre hydraulique et, pour l'exemple développé ici, trois paramètres a, b et c dépendant de la géométrie de l'échangeur thermique ;
- l'étape de calcul comprend au moins l'un parmi le calcul du débit du fluide $f$ et le calcul du débit du fluide $f'$ en fonction des conditions de fonctionnement précédemment déterminées, d'une surface d'échange thermique comprise entre les hauteurs $h_1$ et $h_2$, en tant que paramètres géométriques de l'échangeur thermique, et de l'une respective parmi la capacité calorifique du fluide *f* et la capacité calorifique du fluide *f'*, en tant que propriétés physiques des fluides *f* et *f'* ;

- alternativement à la caractéristique optionnelle précédente, l'étape de calcul comprend le calcul de l'une au moins parmi la résistance de convection *Rcv* du premier côté de la paroi et la résistance de convection *R'cv* du second côté de la paroi en fonction :

    ◦ des conditions de fonctionnement précédemment déterminées,
    ◦ d'une surface d'échange thermique entre les hauteurs $h_1$ et $h_2$, d'un diamètre hydraulique et de trois paramètres a, *b* et c dépendant de la géométrie de l'échangeur thermique, en tant que paramètres géométriques de l'échangeur thermique, et
    ◦ de la masse volumique, la capacité calorifique, la conductivité thermique et la viscosité dynamique de l'un respectif des fluides *f* et *f'*, en tant que propriétés physiques des fluides *f* et *f'* ;

L'étape de calcul peut dès lors comprendre le calcul de l'une au moins parmi la résistance d'encrassement *Re* du premier côté de la paroi et la résistance d'encrassement *R'e* du second côté de la paroi, en fonction de l'une respective parmi la résistance de convection *Rcv* du premier côté de la paroi et la résistance de convection *R'cv* du second côté de la paroi ; Le procédé peut alors comprendre en outre l'étape suivante : calculer au moins l'une parmi l'épaisseur d'encrassement du premier côté de la paroi et l'épaisseur d'encrassement du second côté de la paroi, en fonction de l'une respective parmi la résistance d'encrassement Re du premier côté de la paroi et la résistance d'encrassement *R'e* du second côté de la paroi et de l'une respective parmi une conductivité thermique de l'encrassement déposé sur le premier côté de la paroi et une conductivité thermique de l'encrassement déposé sur le second côté de la paroi ;

- l'une au moins des première et deuxième étapes de détermination peut comprendre les étapes suivantes réalisées à l'aide de l'une respective parmi les première et deuxième bi-sondes, ces étapes étant de préférence coordonnées par le dispositif de supervision :

à compter d'un premier instant *t1* :

    ◦ alimenter les mono-sondes de l'une respective parmi les première et deuxième bi-sondes avec des courants électriques d'intensités différentes,
    ◦ mesurer le courant électrique dans chacune des mono-sondes, et
    ◦ calculer la température *T11(t1), T12(t1), T21(t1), T22(t1)* de chaque mono-

sonde au moins en fonction de la mesure de courant correspondante, puis à compter d'un deuxième instant *t2,* différent du premier instant *t1* :

    ◦ alimenter les mono-sondes de l'une respective parmi les première et deuxième bi-sondes avec des courants électriques d'intensités différentes,
    ◦ mesurer le courant électrique dans chacune des mono-sondes, et
    ◦ calculer la température *T11(t2), T12(t2), T21(t2), T22(t2)* de chaque mono-sonde au moins en fonction de la mesure de courant correspondante, et dans lequel

l'une des première et deuxième étapes de détermination peut comprendre en outre l'une correspondante parmi les étapes suivantes :

    ◦ une première étape de calcul, en fonction de la résistance thermique $Rs_1$ de la première bi-sonde, de la résistance thermique *Rp* de la paroi et des températures *T11(t1), T12(t1), T11(t2) et T12(t2)* des mono-sondes, des conditions de fonctionnement suivantes : la température $Tf_1$ du fluide *f* du premier côté de la paroi et la température $Tf'_1$ du fluide *f'* du second côté de la paroi, et le cas échéant la résistance thermique $R_1$ du premier côté de la paroi et la résistance thermique $R'_1$ du second côté de la paroi, à la première hauteur $h_1$ de circulation,
    ◦ une deuxième étape de calcul, en fonction de la résistance thermique $Rs_2$ de la deuxième bi-sonde, de la résistance thermique Rp de la paroi et des températures *T21(t1), T22(t1), T21(t2) et T22(t2)* des mono-sondes, des conditions de fonctionnement suivantes : la température $Tf_2$ du fluide *f* du premier côté de la paroi, la température $Tf'_2$ du fluide *f'* du second côté de la paroi, la résistance thermique $R_2$ du premier côté de la paroi et la résistance thermique $R'_2$ du second côté de la paroi, à la deuxième hauteur $h_2$ de circulation.

Les première et deuxième étapes de détermination et l'étape de calcul peuvent être répétées autant que nécessaire, de sorte que le dépassement d'une valeur seuil prédéterminée par l'une au moins parmi :

- une différence entre des débits du fluide *f,*
- une différence entre des débits du fluide *f',*
- une différence entre des résistances de convection *Rcv,*
- une différence entre des résistances de convection *R'cv,*
- une différence entre des résistances d'encrassement *Re,* et
- une différence entre des résistances d'encrassement *R'e,*

soit représentative d'une évolution des conditions de fonctionnement de l'échangeur de chaleur et le cas échéant permette une prise de décision quant à la réalisation d'une opération de remise en état ou de remplacement de la paroi, voire de l'échangeur de chaleur.

On entend par mesurer, déterminer ou calculer des paramètres, le fait de mesurer, déterminer ou calculer les valeurs de ces paramètres, respectivement. Lesdits paramètres comprennent notamment ceux d'un courant électrique et des conditions de fonctionnement d'un échangeur de chaleur.

On entend par « circuit résistif » un chemin ou une piste de conduction électrique allant d'un point à un autre, par exemple d'un connecteur à un autre ou d'une borne à une autre, en présentant de préférence des sinuosités de façon à couvrir, de préférence en grande partie et de manière la plus homogène possible, une surface généralement plane.

Le mot « diélectrique » qualifie un matériau dont la conductivité électrique est suffisamment faible dans l'application donnée pour servir d'isolant électrique.

On entend par « encapsulant » le revêtement résultant d'une opération d'encapsulation consistant à enrober au moins partiellement un objet pour l'isoler électriquement et éventuellement le protéger.

On entend par « conforme » la qualité géométrique d'une couche qui présente une même épaisseur malgré des changements de direction de couche, par exemple au niveau de flancs d'une sonde de température.

On entend par un élément « à base » d'un matériau A, un élément comprenant ce matériau A et éventuellement d'autres matériaux.

On entend par « courant électrique » un déplacement d'ensemble de porteurs de charges électriques, généralement des électrons, au sein d'un matériau conducteur. Le courant électrique est défini par un ensemble de paramètres parmi lesquels l'intensité, la tension et la puissance.

On entend par « matériau électriquement conducteur thermosensible » un matériau électriquement conducteur, tel qu'un métal, dont la résistance varie avec la température selon une loi d'évolution propre au matériau électriquement conducteur. Dans le cadre de l'invention, un circuit résistif 11, 21 à base d'un tel matériau, constitue en partie une mono-sonde 1, 2 dont la température varie en fonction de la résistance du circuit résistif 11, 21 selon la loi d'évolution *ad hoc.*

La loi d'évolution s'écrit généralement sous la forme $T = T_0 + \dfrac{\frac{R_T}{R_0} - 1}{\alpha}$ où, lorsqu'on l'applique dans le cadre de l'invention, $T_0$ est une température de référence (en °C), $T$ est la température (en °C) de la mono-sonde 1, 2, $R_T$ et $R_0$ sont les résistances électriques (en ohm) du circuit résistif 11, 21 respectivement à la température T de la mono-sonde 1, 2 et à la température $T_0$, et $\alpha$ est une constante (en °C$^{-1}$) appelée coefficient thermique et définie dans la norme relative au matériau considéré.

On entend par « hauteur de circulation », la distance orientée dans un sens de circulation (ou dans le sens opposé) à parcourir pour atteindre une position donnée sur un chemin de circulation. Ici, la circulation est celle d'un fluide le long d'une paroi, et plus particulièrement de deux fluides *f* et *f'* de part et d'autre de la paroi ; en configuration de circulation des fluides *f* et *f'* à contre-courant de part et d'autre de la paroi, la distance peut être orientée dans le sens de circulation du fluide *f* circulant d'un premier côté de la paroi, et dans le sens opposé, au sens de circulation du fluide *f'* d'un second côté de la paroi ; le chemin de circulation est au moins en partie porté par la paroi.

On entend par « débit », le débit massique (en kg/s), sachant que ce débit massique est directement proportionnel au débit volumique (en m$^3$/s), le coefficient de proportionnalité étant ici la masse volumique (en kg/m$^3$) du fluide dont le débit est considéré.

On entend par « capacité calorifique » d'un fluide la capacité calorifique Cp à pression constante du fluide. Elle s'exprime en J·kg$^{-1}$·K$^{-1}$.

Le « diamètre hydraulique » est communément utilisé pour le calcul des écoulements dans un tube, une conduite hydraulique ou un canal. En utilisant ce diamètre particulier, on peut faire des calculs similaires à ceux d'un tube circulaire. Cette grandeur est homogène à une longueur.

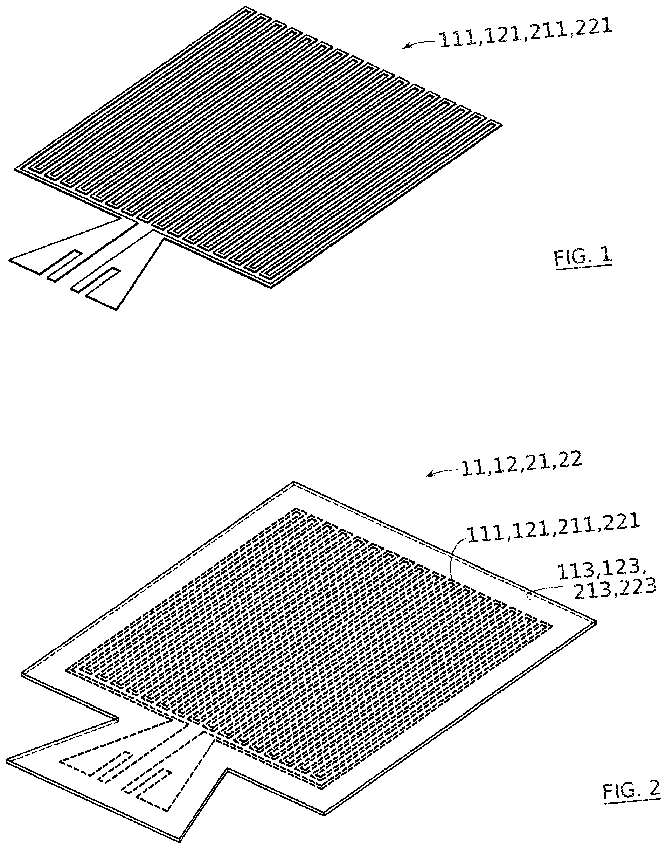

Une bi-sonde 1, 2 de température du système selon le premier aspect de l'invention est décrite ci-dessous en référence aux figures 1 à 5.

Cette description vaut pour l'une au moins des deux bi-sondes 1 et 2, et de préférence pour toutes les bi-sondes 1, 2, mises en oeuvre par le procédé selon le deuxième aspect de l'invention.

L'une au moins des deux bi-sondes 1 et 2 comprend deux mono-sondes 11, 12 et 21, 22, ainsi qu'une couche 13, 23 à base d'un matériau thermiquement isolant. La couche 13, 23 est intercalée entre les deux mono-sondes 11, 12 et 21, 22 de chacune des deux bi-sondes 1 et 2.

Une mono-sonde 11, 12, 21, 22 de température est décrite ci-dessous en référence aux figures 1 à 5.

Cette description vaut pour l'une au moins des mono-sondes 11, 12, 21, 22, et de préférence pour toutes les mono-sondes 11, 12, 21, 22, mises en oeuvre par le procédé selon le deuxième aspect de l'invention.

Chaque mono-sonde 11, 12, 21, 22 comprend un circuit résistif 111, 121, 211, 221 par exemple tel qu'illustré sur la figure 1. Chaque circuit résistif 111, 121, 211, 221 est mis en forme de manière à maximiser la surface développée et à occasionner un dépôt de puissance le plus homogène possible. A cette fin et comme illustré sur la figure 1, chaque circuit résistif 111, 121, 211, 221 peut prendre la forme d'un serpentin de manière à faire tenir une grande longueur de piste de conduction électrique sur une surface de dimensions limitées. Chaque circuit résistif 111, 121, 211, 221 peut prendre d'autres formes, par exemple une forme en spirale. La largeur de la piste est typiquement comprise entre 10 $\mu$m et 1 mm et est par exemple égale à 140 $\mu$m. L'épaisseur de la piste est typiquement comprise entre 5 $\mu$m et 30 $\mu$m et est par exemple égale à 10 $\mu$m.

Chaque circuit résistif 111, 121, 211, 221 est à base d'un matériau électriquement conducteur thermosensible. Par exemple, chaque circuit résistif 111, 121, 211, 221 est à base d'un métal thermosensible, choisi par exemple parmi le nickel, le platine, le tungstène, le cuivre et tout alliage à base de ces métaux, car tous possèdent la propriété d'avoir un coefficient thermique $\alpha$ (en °C$^{-1}$) élevé, pour pouvoir être mesurée avec des dispositifs de mesures de courant 20 conventionnels. D'autres types de métaux peuvent être utilisés, si ceux-ci présentent un coefficient thermique suffisamment élevé.

Selon la loi d'évolution *ad hoc,* la résistance $R_T$ de chaque circuit résistif 111, 121, 211, 221 peut être convertie en température *T*, en connaissant les caractéristiques de thermo-sensibilité $\alpha$, $T_0$ et $R_0$ du métal constitutif du circuit résistif 111, 121, 211, 221. La résistance $R_T$ du circuit résistif 111, 121, 211, 221 peut être déterminée en connaissant au moins deux paramètres parmi la puissance *P*, l'intensité *I* et la tension *U* du courant électrique circulant dans le circuit résistif 111, 121, 211, 221. La sensibilité thermique de chaque mono-sonde 11, 12, 21, 22 s'exprime en °C/W ; elle dépend de son environnement thermique. La sensibilité thermique de chaque mono-sonde 11, 12, 21, 22 peut être typiquement d'environ 1°C/W, ce qui signifie que la température de chaque mono-sonde 1, 2 s'élève de 1°C pour une puissance appliquée de 1 W.

Que le courant électrique circulant dans un circuit résistif soit continu ou alternatif, différents dispositifs de mesure de courant électrique 20, tels qu'un dispositif de mesure de tension (voltmètre), un dispositif de mesure d'intensité (ampèremètre) ou un dispositif de mesure de puissance peuvent être utilisés pour calculer la tension, l'intensité ou la puissance respectivement du courant électrique circulant dans le circuit résistif 111, 121, 211, 221. Le dispositif de mesure 20 utilisé peut être choisi pour mesurer le paramètre non imposé, et donc non connu, par le dispositif d'alimentation 10 qui de façon corrélée peut être un dispositif d'alimentation en tension ou en intensité.

Comme illustré sur la figure 2, chaque circuit résistif 111, 121, 211, 221 peut être encapsulé dans un encapsulant 113, 123, 213, 223. L'encapsulant 113, 123, 213, 223 peut enrober complètement le circuit résistif 111, 121, 211, 221, ou en partie seulement. L'encapsulant 113, 123, 213, 223 peut être appliqué par lamination d'un film, ou de deux films, d'un côté ou des deux côtés du circuit résistif 111, 121, 211, 221, respectivement. En alternative ou en combinaison, le circuit résistif 111, 121, 211, 221 peut être imprimé ou déposé directement sur un film d'encapsulant 113, 123, 213, 223. L'encapsulant 113, 123, 213, 223 est à base d'un matériau diélectrique, tel qu'un polymère. Ce polymère peut être un polyimide, tel que du Kapton®. Un film en Kapton® peut présenter par exemple des dimensions de 30 mm x 60 mm x 25 à 50 $\mu$m. Les dimensions et la forme des films, et donc de l'encapsulant 113, 123, 213, 223, peuvent être adaptées à la surface dans laquelle s'inscrit le circuit résistif 111, 121, 211, 221. L'encapsulant 113, 123, 213, 223 joue le rôle de protection et d'isolation électrique du circuit résistif 111, 121, 211, 221. L'encapsulant 113, 123, 213, 223 est de préférence propre à résister aux températures auxquelles la bi-sonde 1, 2 selon l'invention est destinée à être soumise. Si ces températures sont élevées, par exemple supérieures à 200°C, voire de l'ordre de 350°C pour des applications au secteur pétrolier notamment, les matériaux constituant la bi-sonde 1, 2 peuvent être adaptés, et notamment l'encapsulant 113, 123, 213, 223 est de préférence un matériau thermostable.

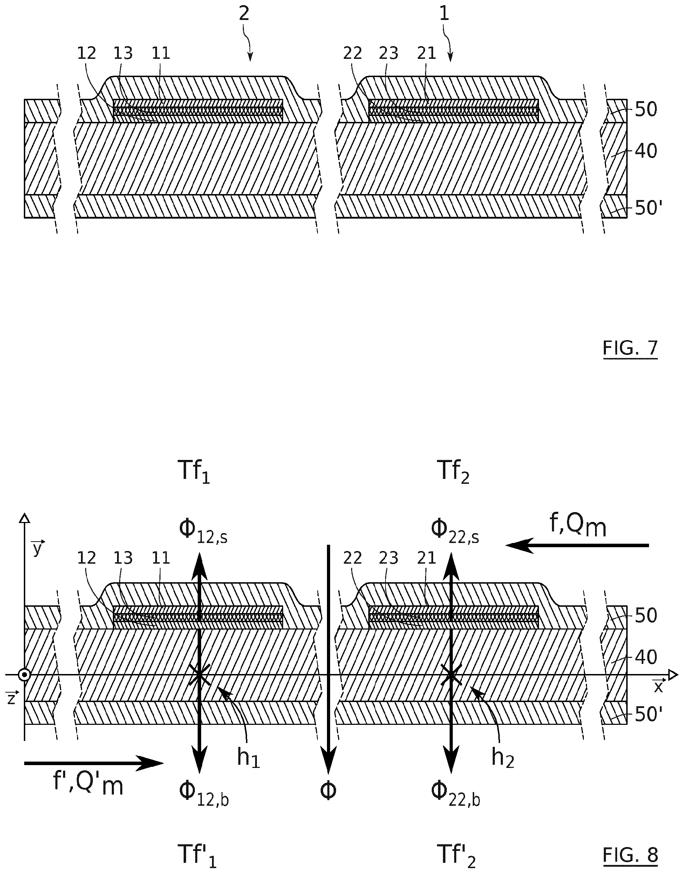

Chaque circuit résistif 111, 121, 211, 221 et son encapsulant 113, 123, 213, 223 forment ainsi une mono-sonde 11, 12, 21, 22. Chaque mono-sonde 11, 12, 21, 22 couvre typiquement une surface de forme libre, allant de un à quelques cm$^2$, adaptable à la zone de la paroi 40 de l'échangeur de chaleur sur laquelle elle est destinée à être disposée. Chaque mono-sonde 11, 12, 21, 22 est ainsi de faible épaisseur ce qui lui assure une certaine flexibilité et donc une adaptation facilitée à presque toute forme de support. En outre, il est dès lors possible de négliger, en bonne approximation, les pertes thermiques par les flancs de la mono-sonde 11, 12, 21, 22. Ainsi, l'invention n'est nullement limitée aux exemples illustrés sur les figures 6 et 7 où la paroi 40 est plane ; la paroi 40 peut prendre toute forme, et par exemple peut être refermée sur elle-même, par exemple de sorte à former un tube.

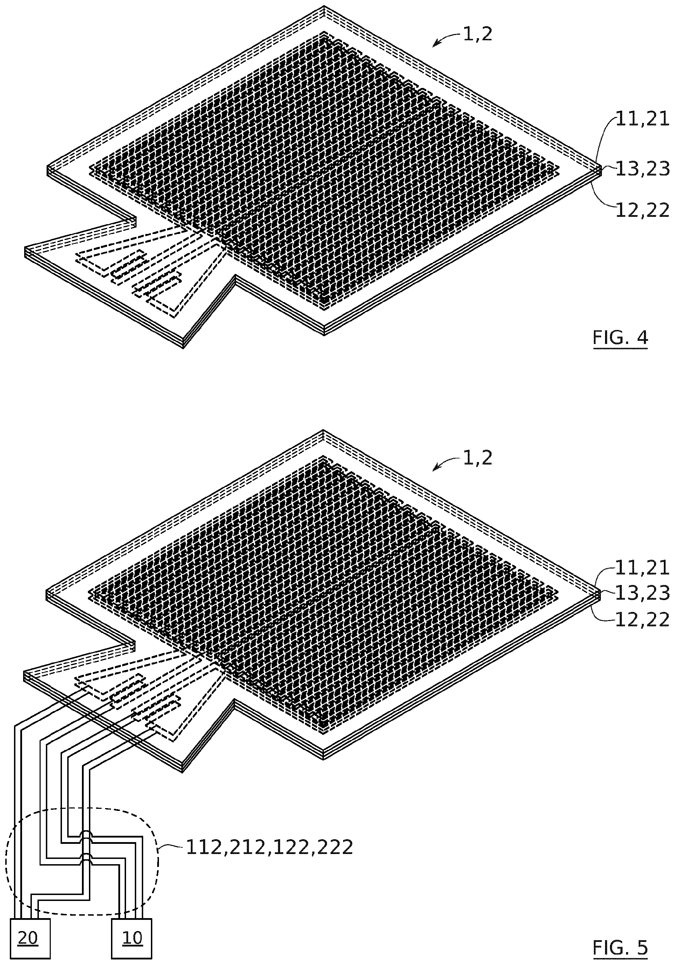

Chaque mono-sonde 11, 12, 21, 22 a deux fonctions : celle de dissipateur à effet Joule et celle de mesure résistive de température. A cette fin, et comme illustré sur la figure 5, chaque mono-sonde 11, 12, 21, 22 peut être câblée avec quatre fils 112, 212, 122, 222, le cas échéant à travers l'encapsulant 113, 123, 213, 223 : deux fils pour l'alimentation en courant électrique et deux fils pour la mesure de tension aux bornes du circuit résistif 111, 121, 211, 221 correspondant, les deux fils pour la mesure de tension étant disposés en parallèle des deux fils pour l'alimentation en courant électrique.

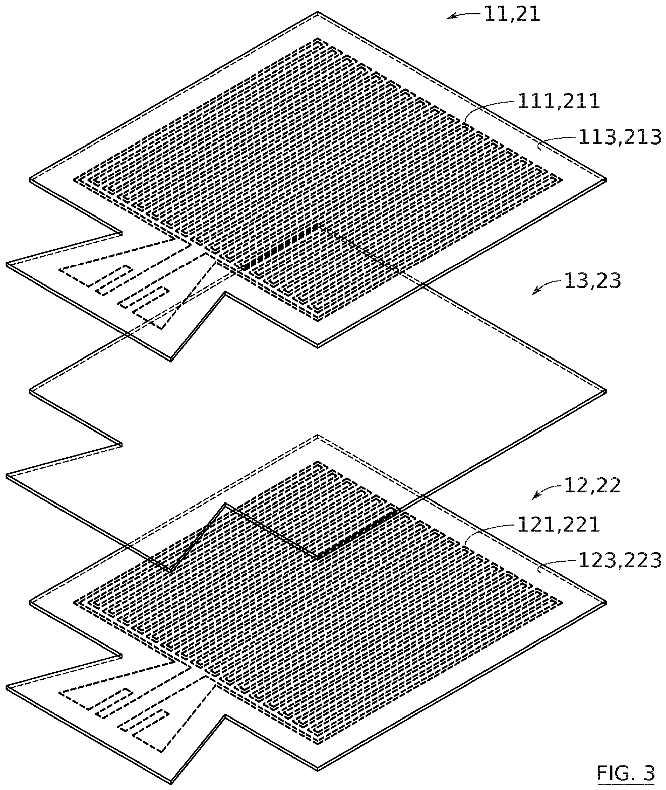

Comme introduit plus haut et comme illustré sur les figures 3 et 4, chaque bi-sonde 1, 2 comprend en outre la couche 13, 23 à base d'un matériau isolant thermique. La couche 13, 23 est intercalée entre les deux mono-sondes 11, 12, 21, 22 de la bi-sonde 1, 2, par exemple par collage. Le collage d'une mono-sonde 11, 12, 21, 22 sur la couche 13, 23 peut nécessiter un adhésif, par exemple adapté à un collage de la couche 13, 23 sur un film polyimide constituant en partie l'encapsulant 113, 123, 213, 223 de chaque mono-sonde 11, 12, 21, 22. La couche 13, 23 est d'une surface égale ou supérieure à celle de chaque mono-sonde 11, 12, 21, 22. La couche 13, 23 crée une résistance thermique $R_{TH}$ entre les deux mono-sondes 11, 12, 21, 22. Cette résistance thermique $R_{TH}$ est fonction de l'épaisseur e et de la conductivité thermique $\lambda$ du matériau thermiquement isolant à base duquel est constituée la couche 13, 23 : $R_{TH} = \lambda/e$. La résistance thermique $R_{TH}$ peut déterminer, à elle seule et/ou en bonne approximation, la résistance thermique $Rs_1$, $Rs_2$ de la bi-sonde 1, 2. Toutefois, la résistance thermique $Rs_1$, $Rs_2$ de chaque bi-sonde 1, 2 peut également être caractérisée par des étalonnages en chauffant alternativement une mono-sonde 11, 12, 21, 22, puis l'autre 12, 11, 22, 21, pour établir les relations entre les flux thermiques créés (qui sont connus par calcul) et les écarts d'évolution de température créés entre les deux mono-sondes 11, 12, 21, 22 (qui sont mesurés). Une telle caractérisation est notamment envisagée lorsque la bi-sonde 1, 2 est placée entre deux corps matériaux de résistivités connues et très différentes. La bi-sonde 1, 2 présente ainsi une résistance thermique $Rs_1$, $Rs_2$ fonction au moins de l'épaisseur e et de la conductivité thermique $\lambda$ de la couche 13, 23 intercalée entre les deux mono-sondes 11, 12, 21, 22.

Ainsi, les températures d'équilibre des mono-sondes 11, 12, 21, 22 de la bi-sonde 1, 2 peuvent être différentes, voire indépendantes, l'une de l'autre, en particulier lorsque l'on applique des intensités électriques différentes aux circuits résistifs 111, 121, 211, 221. De la sorte, la bi-sonde 1, 2 permet d'associer des flux thermiques la traversant à des écarts de température, ou à des écarts d'évolution de température, entre les deux mono-sondes 11, 12, 21, 22.

Comme illustré sur la figure 5, chaque circuit résistif 111, 121, 211, 221 est destiné à être lié, en particulier depuis sa paire de connecteurs et par liaisons filaires 112, 212, 122, 222, et le cas échéant à travers l'encapsulant 113, 123, 213, 223 d'une part au dispositif d'alimentation 10, d'autre part au dispositif de mesure 20. Le dispositif d'alimentation électrique 10 permet l'alimentation électrique indépendante et coordonnée, par exemple en courant continu, de chacune des mono-sondes 11, 12, 21, 22. Le dispositif de mesure 20 permet des mesures indépendantes de la tension aux bornes du circuit résistif 111, 121, 211, 221 de chacune des mono-sondes 11, 12, 21, 22, et éventuellement du courant électrique dans le circuit résistif 111, 121, 211, 221 de chacune des mono-sondes 11, 12, 21, 22. L'indépendance de l'alimentation signifie qu'il est possible de déposer des puissances variables et différentes en fonction du temps dans chaque circuit résistif 111, 121, 211, 221 de chacune des mono-sondes 11, 12, 21, 22. L'indépendance des mesures tension, et éventuellement de courant, signifie qu'il est possible de mesurer la tension, et éventuellement le courant, et/ou l'évolution de la tension, et éventuellement l'évolution du courant ; dès lors, il est possible de calculer la température et/ou l'évolution de la température, d'une mono-sonde 11, 12, 21, 22 indépendamment de la température et/ou de l'évolution de la température de l'autre mono-sonde 12, 11, 22, 21. La coordination de l'alimentation signifie qu'il est possible d'appliquer des consignes de pilotage de l'alimentation de chaque mono-sonde 11, 12, 21, 22 en fonction de l'alimentation de l'autre mono-sonde 12, 11, 22, 21 selon des stratégies déterminées. Comme mentionné plus haut, le dispositif de mesure 20 utilisé peut être choisi pour mesurer le paramètre non imposé, et donc non connu, par le dispositif d'alimentation 10. Par exemple, le dispositif d'alimentation 10 est un dispositif d'alimentation en intensité et impose donc une valeur d'intensité du courant dans le circuit résistif 111, 121, 211, 221 qu'il alimente et le dispositif de mesure 20 est un voltmètre mesurant la tension aux bornes du circuit résistif 111, 121, 211, 221, de sorte que la loi d'ohm permette de remonter à la résistance $R_T$ du circuit résistif 111, 121, 211, 221, puis remonter, via la loi d'évolution *ad hoc,* à la température *T1*, *T2* de la mono-sonde 11, 12, 21, 22 comprenant le circuit résistif 111, 121, 211, 221. En alternative ou en complément, l'intensité dans chaque circuit résistif 111, 121, 211, 221 peut également être mesurée par le dispositif de mesure 20. Ainsi, le procédé 300 résiste à une erreur qui serait liée à l'alimentation en intensité par le dispositif d'alimentation 10 ou à une erreur dans la communication au dispositif de supervision 30 de la valeur d'intensité du courant déposé dans chaque circuit résistif 111, 121, 211, 221 par le dispositif d'alimentation 20.

L'indépendance et/ou la coordination des alimentations et des mesures, ainsi que certains au moins des différents calculs du procédé selon l'invention, peuvent être assurés par un dispositif de supervision 30 (illustré sur la figure 6) du dispositif d'alimentation 10 et du dispositif de mesure 20. A cette fin, le dispositif de supervision 30 peut comprendre des moyens de traitement numérique, tel qu'un micro-processeur ou un microcontrôleur, ou un dispositif de traitement analogique. Il peut notamment commander les mesures de courant et/ou les calculs de température *T1*, *T2* de chaque mono-sonde 11, 12, 21, 22 de façon continue ou échantillonnée, par exemple avec une vitesse d'échantillonnage comprise entre une et dix mesures par seconde. Ainsi, le dispositif de supervision 30 peut être configuré en outre pour détecter qu'un régime stationnaire a été atteint dans l'évolution en résistance ou en température de chaque mono-sonde 11, 12, 21, 22 vers une résistance ou une température d'équilibre, respectivement. Le régime stationnaire peut être considéré comme atteint lorsqu'un écart-type calculé par le dispositif de supervision 30 sur les valeurs de résistance ou de température *T1*, *T2* passe sous une valeur seuil prédéfinie. Dans le contexte de l'invention, les températures d'équilibre de chaque mono-sonde 11, 12, 21, 22 dépendent de l'environnement thermique de chaque mono-sonde 11, 12, 21, 22, et dépendent au moins des températures *Tf* et *Tf'* de fluides *f* et *f'* circulant de part et d'autre de la paroi 40 de l'échangeur thermique. Les fluides *f* et *f'* sont généralement choisis en fonction de l'application à laquelle l'échangeur de chaleur est destiné. Ils présentent donc des propriétés physiques connues. Ces propriétés peuvent dépendre des conditions de température, de pression ou autres dans lesquels les fluides se trouvent. Lorsqu'au moins l'une de ces conditions est connue, que ce soit de façon théorique, heuristique ou par sa mesure, les propriétés physiques des fluides peuvent être déterminées en prenant cette condition en compte.

Deux au moins parmi les dispositifs d'alimentation 10, de mesure 20 et de supervision 30 peuvent être intégrés ensemble de façon à ne former qu'un dispositif remplissant les fonctions de chacun des dispositifs intégrés.

Le procédé 300 d'évaluation d'au moins une condition de fonctionnement d'un échangeur de chaleur selon un aspect de l'invention est décrit ci-dessous en référence aux figures 7 à 10 annexées.

Pour connaître l'environnement thermique immédiat de chaque bi-sonde 1, 2 et de la paroi 40 sur laquelle les deux bi-sondes 1, 2 sont fixées, il est utile de déterminer différents paramètres caractérisant localement cet environnement. Parmi ces paramètres, l'on compte ceux relatifs aux régimes de convection se produisant de chaque côté de la paroi 40, la résistance thermique Rp de la paroi 40, la résistance thermique $Rs_1$, $Rs_2$ de chaque bi-sonde 1, 2, les résistances thermiques d'encrassement *Re* et *R'e* de chaque côté de la paroi 40, les températures $Tf_1$, $Tf'_1$ des fluides *f* et *f'* s'écoulant de chaque côté de la paroi 40 à une première hauteur $h_1$ de circulation des fluides, les températures $Tf_2$, $Tf'_2$ des fluides *f* et *f'* s'écoulant de chaque côté de la paroi 40 à une deuxième hauteur $h_2$ de circulation des fluides, et le flux thermique $\Phi$ traversant la paroi 40.

Les régimes de convection se produisant de chaque côté de la paroi 40 sont quantifiables en résistances thermiques de convection *Rcv* et *R'cv* de chaque côté de la paroi 40. Ces résistances thermiques peuvent varier notamment en fonction de la hauteur de circulation des fluides. Auquel cas, il est possible de les décliner en des valeurs de résistances thermiques de convection $Rcv_1$ et $R'c_{V1}$ à la première hauteur $h_1$ de circulation des fluides et en des valeurs $Rcv_2$ et $R'cv_2$ à la deuxième hauteur $h_2$ de circulation des fluides. Il peut en aller de même pour les résistances thermiques d'encrassement *Re* et *R'e*, ainsi que pour les résistances thermiques R et R' dites globales qui sont la somme des contributions des résistances thermiques de convection et d'encrassement de chaque côté de la paroi : *R = Rcv+Re* et *R' = R'cv+R'e.*

La résistance thermique Rp de la paroi 40 peut être supposée invariante en temps et indépendante de la hauteur de circulation des fluides. Elle peut être une résistance thermique de référence. Comme discuté plus haut, la résistance thermique $Rs_1$, $RS_2$ de chaque bi-sonde 1, 2 peut en bonne approximation être considérée égale à la résistance thermique $R_{TH}$ de la couche 13, 23 isolant thermiquement les mono-sondes 11, 12, 21, 22 entre elles ; en alternative, la résistance thermique $Rs_1$, $Rs_2$ de chaque bi-sonde 1, 2 peut être mesurée.

Pour évaluer les conditions de fonctionnement d'un échangeur de chaleur, une première bi-sonde 1 de température est disposée, comme illustré sur la figure 6, sur la paroi 40 de l'échangeur de chaleur à la première hauteur *h1* de circulation des fluides. Une deuxième bi-sonde 2 de température est en outre disposée, comme illustré sur la figure 6, sur la paroi 40 de l'échangeur de chaleur à la deuxième hauteur *h2* de circulation des fluides. Chaque bi-sonde 1, 2 est de préférence disposée à un emplacement de la paroi 40 à travers laquelle s'opère un transfert de chaleur, à destination fonctionnelle, entre les deux fluides *f* et *f'* circulant de part et d'autre de la paroi 40 et sur laquelle est susceptible de se déposer un encrassement 50, 50'. De la sorte, les conditions de fonctionnement, éventuellement dégradées, de l'échangeur de chaleur peuvent être évaluées et cette évaluation peut permettre une prise de décision quant à la réalisation d'une opération de remise en état ou de remplacement de la paroi 40, voire de l'échangeur de chaleur.

Chaque bi-sonde 1, 2 est de préférence disposée sur la paroi 40 lorsque celle-ci n'est pas recouverte d'un encrassement 50, 50' ou sur une partie non-encrassée de la paroi 40, de sorte d'être directement en contact avec la paroi 40. Chaque bi-sonde 1, 2 peut indifféremment être disposée d'un côté ou de l'autre de la paroi 40. Un encrassement 50, 50' peut indifféremment être destiné à se former du côté de la paroi 40 où au moins une des bi-sondes 1, 2 est disposée, de l'autre côté, ou des deux côtés de la paroi 40. L'encrassement 50, 50' peut être destiné à se former au moins en partie sur au moins une des bi-sondes 1, 2 et s'étendre de toute part autour de celle-ci le long de la paroi 40. Comme illustré sur la figure 7, lorsque l'encrassement 50 se forme notamment du côté de la paroi 40 où les bi-sondes 1, 2 sont disposées, cet encrassement 50 peut être conforme.

L'encrassement 50 formé d'un côté de la paroi 40 peut être d'une nature différente de l'encrassement 50' formé de l'autre côté de la paroi 40. La nature et/ou l'épaisseur des encrassements 50, 50' peut dépendre de la nature des fluides *f* et *f'*, respectivement, ainsi que de leur températures *Tf* et *Tf'*. La nature et/ou l'épaisseur des encrassements 50, 50' peut également dépendre de la géométrie et/ou de la nature et/ou de l'état de surface de la paroi 40. La nature et/ou l'épaisseur des encrassements 50, 50' peut dépendre des régimes d'écoulement des fluides *f* et *f'* circulant de part et d'autre de la paroi 40. Des écoulements à contre-courant des fluides *f* et *f'* sont illustrés sur la figure 8, mais le procédé selon l'invention s'applique également dans d'autres configurations d'écoulements, et notamment pour des écoulements à co-courant. Dans l'exemple illustré sur la figure 7, les deux bi-sondes 1, 2 sont disposées d'un premier côté de la paroi 40 : une première mono-sonde 11, 21 de chaque bi-sonde 1, 2 est disposée sur la paroi 40 par l'intermédiaire de l'autre mono-sonde 12, 22 et de la couche 13, 23 intercalée.

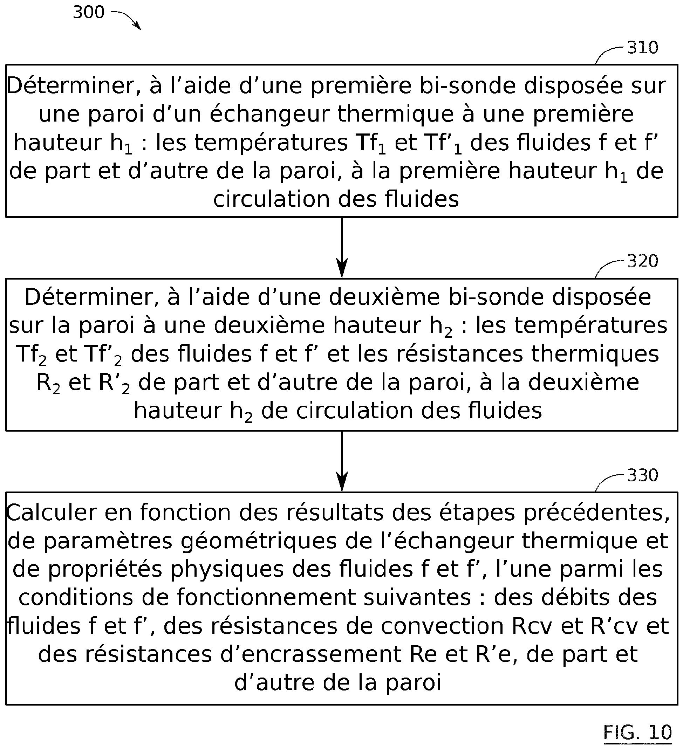

Selon un mode de réalisation de l'invention et en référence à la figure 10, le procédé 300 d'évaluation d'au moins une condition de fonctionnement d'un échangeur de chaleur, mettant en oeuvre un système 0 tel qu'illustré sur la figure 6, comprend les étapes suivantes mises en oeuvre en utilisant les dispositifs d'alimentation 10, de mesure 20 et de supervision 30 :

- une première étape de détermination 310, à l'aide de la première bi-sonde 1 et en fonction de la résistance thermique $Rs_1$ de la première bi-sonde 1 et de la résistance thermique Rp de la paroi 40, d'au moins les conditions de fonctionnement suivantes : la température $Tf_1$ du fluide $f$ du premier côté de la paroi 40 et la température $Tf'_1$ du fluide $f$ du second côté de la paroi 40, à la première hauteur $h_1$ de circulation, et
- une deuxième étape de détermination 320, à l'aide de la deuxième bi-sonde 2 et en fonction de la résistance thermique $Rs_2$ de la deuxième bi-sonde 2 et de la résistance thermique $Rp$ de la paroi 40, d'au moins les conditions de fonctionnement suivantes : la température $Tf_2$ du fluide $f$ du premier côté de la paroi 40, la température $Tf'_2$ du fluide $f$ du second côté de la paroi 40, la résistance thermique $R_2$ du premier côté de la paroi 40 et la résistance thermique $R'_2$ du second côté de la paroi 40, à la deuxième hauteur $h_2$ de circulation.

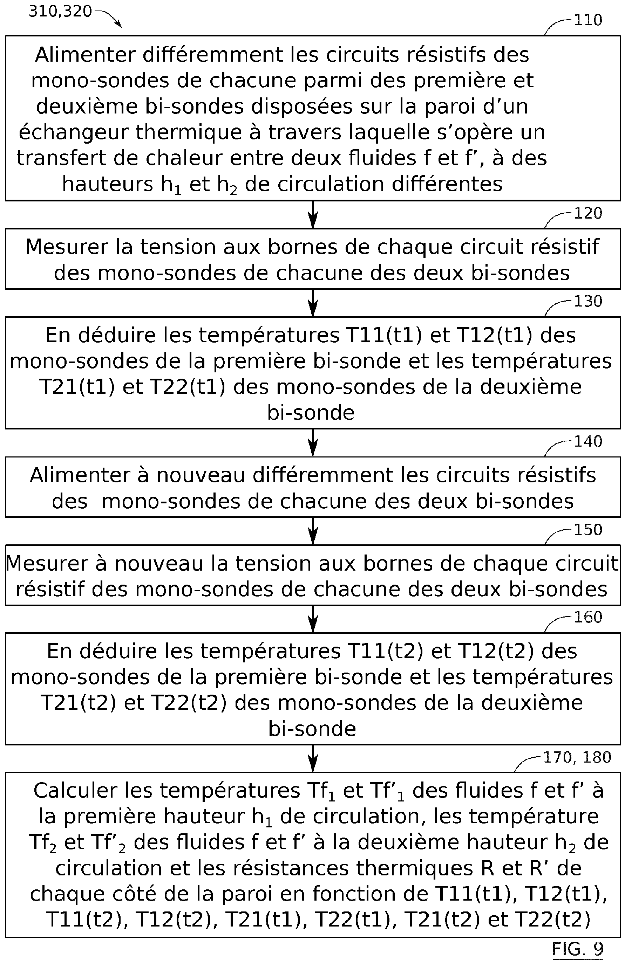

Selon un mode de réalisation du procédé selon l'invention et en référence à la figure 9, l'une au moins des première et deuxième étapes de détermination 310, 320 comprend les étapes décrites ci-dessous, réalisées à l'aide de l'une respective parmi les première et deuxième bi-sondes 1, 2. Ces étapes sont de préférence coordonnées par le dispositif de supervision 30.

Ces étapes comprennent comprend une première série des étapes suivantes :

- alimenter 110 les mono-sondes 11, 12, 21, 22, et plus particulièrement les circuits résistifs 111, 121, 211, 221, de l'une respective parmi les première et deuxième bi-sondes 1,2 avec des courants électriques d'intensités différentes,
- mesurer 120 la tension aux bornes de chacune des mono-sondes 11, 12, 21, 22, et plus particulièrement dans chacun des circuits résistifs 111, 121, 211, 221, et éventuellement le courant électrique dans chacune des mono-sondes 11, 12, 21, 22, et plus particulièrement dans chacun des circuits résistifs 111, 121, 211, 221, puis
- calculer 130 la température $T11(t1), T12(t1), T21(t1), T22(t1)$ de chaque mono-sonde 11, 12, 21, 22 en fonction de la mesure de tension correspondante, et éventuellement en fonction de la mesure de courant correspondante.

Cette première série d'étapes 110 à 130 est réalisée à compter d'un premier instant *t1,* puis une deuxième série d'étapes correspondantes 140 à 160, de préférence à nouveau coordonnées par le dispositif de supervision 30, est réalisée à compter d'un deuxième instant *t2.* Cette deuxième série d'étapes 140 à 160 permet de calculer 160 la température *T11(t2), T12(t2), T21(t2), T22(t2)* de chaque mono-sonde 11, 12, 21, 22 en fonction de la mesure de courant correspondante, et éventuellement en fonction de la mesure de courant correspondante. La deuxième série d'étapes n'est réalisée qu'une fois la première série d'étapes achevées, ou du moins qu'une fois les mesures 120 achevées.

La température *Ti(tj),* avec $i$ = 11, 12, 21 ou 22 et $j$ = 1 ou 2, est la température de la mono-sonde i déterminée à compter de l'instant *tj*. Les calculs 130, 160 de chaque température *Ti(tj)* peut impliquer le calcul intermédiaire de chaque résistance électrique *Ri(tj)* correspondante selon la loi d'évolution *ad hoc* évoquée plus haut, où *Ri(tj),* où $i$ = 11, 12, 21 ou 22 et $j$ = 1 ou 2, est la résistance électrique de la mono-sonde i déterminée à compter de l'instant *tj*.

La première étape de détermination 310 du procédé 300 selon le mode de réalisation illustré sur la figure 9 comprend alors en outre l'étape suivante :

- calculer 170, en fonction de la résistance thermique $Rs_1$ de la première bi-sonde 1, de la résistance thermique Rp de la paroi 40 et des températures *T11(t1), T12(t1), T11(t2) et T12(t2)* des mono-sondes 11, 12, des conditions de fonctionnement suivantes :

  ∘ la température $Tf_1$ du fluide $f$ du premier côté de la paroi 40 et
  ∘ la température $Tf'_1$ du fluide $f$ du second côté de la paroi 40, et le cas échéant :

    ∘ la résistance thermique $R_1$ du premier côté de la paroi 40 et
    ∘ la résistance thermique $R'_1$ du second côté de la paroi 40, à la première hauteur $h_1$ de circulation.

La deuxième étape de détermination 320 du procédé 300 selon le mode de réalisation illustré sur la figure 9 comprend alors en outre l'étape suivante :

- calculer 180, en fonction de la résistance thermique $Rs_2$ de la deuxième bi-sonde 2, de la résistance thermique *Rp*

de la paroi 40 et des températures *T21(t1), T22(t1), T21(t2) et T22(t2)* des mono-sondes 21, 22, des conditions de fonctionnement suivantes :

- ◦ la température $Tf_2$ du fluide *f* du premier côté de la paroi 40,
- ◦ la température $Tf'_2$ du fluide *f'* du second côté de la paroi 40,
- ◦ la résistance thermique $R_2$ du premier côté de la paroi 40 et
- ◦ la résistance thermique $R'_2$ du second côté de la paroi 40, à la deuxième hauteur $h_2$ de circulation.

Un mode de réalisation particulier de l'invention est décrit ci-après en référence à la figure 8. Cette description permet d'expliciter en détails le calcul 170 introduit plus haut. La description détaillée du calcul 180 introduit plus haut n'est pas donnée ici, mais la description détaillée du calcul 170 peut aisément être adaptée pour l'obtenir.

La description détaillée du calcul 170 est plus particulièrement donnée ci-après dans un contexte selon lequel le courant électrique alimentant 110, 140 le circuit résistif 111 de la première mono-sonde 11 de la première bi-sonde 1 consiste en une alimentation en intensité et est paramétré de sorte à induire une évolution de température nulle de la première mono-sonde 11. Une telle puissance électrique est fournie au circuit résistif 111 pour y induire une différence de tension et pouvoir remonter à ses températures *T11(t1)* et *T11(t2)* par la loi d'ohm et la loi d'évolution ad *hoc*. L'on peut également considérer que la température *T11* de la première mono-sonde 11 de la première bi-sonde 1 n'évolue pas sur la période d'acquisition des températures *T11(t1)* et *T11(t2),* ce qui permet de considérer que *T11(t2) = T11(t1)* et donc de se limiter au calcul d'une seule des températures *T11(t1)* et *T11(t2).* Il convient donc de considérer que l'une ou l'autre des étapes d'alimentation 110, 140 du circuit résistif 111 peut comprendre l'application d'un courant d'alimentation d'intensité nulle à compter de l'un ou l'autre parmi le premier instant *t1* et le deuxième instant *t2.* Il convient également de considérer que l'une des étapes de mesure de tension 120, 150 aux bornes du circuit résistif 111 peut consister à reprendre le résultat de l'autre des étapes de mesure de tension 150, 120 aux bornes du circuit résistif 111.

Dans ce contexte, lorsque la deuxième mono-sonde 12 de la première bi-sonde 1, dissipe de l'énergie thermique, une élévation de sa température *T12* permet d'établir un équilibre thermique avec son environnement. La différence de température *ΔT* entre la température initiale de la deuxième mono-sonde 12 sans dissipation de puissance et la température d'équilibre *T12(t1)* ou *T12(t2)* avec dissipation de puissance est fonction de l'énergie dissipée et des résistances thermiques de l'environnement. Notamment, si un encrassement 50 et/ou 50' ajoute une résistance thermique Re et/ou R'e dans l'environnement de la première bi-sonde 1, il est possible de la détecter par la modification induite sur la différence de température *ΔT*.

A compter du premier instant *t1,* on dépose 110 une puissance *P12(t1)* dans la deuxième mono-sonde 12 de la première bi-sonde 1. De préférence à l'atteinte du régime thermique stationnaire de l'évolution en température de la deuxième mono-sonde 12, on en calcule 130 la température *T12(t1).*

Puis, à compter du deuxième instant *t2,* on dépose 140 une puissance *P12(t2)* dans la deuxième mono-sonde 12. De préférence à l'atteinte du régime thermique stationnaire de l'évolution en température de la deuxième mono-sonde 12, on en calcule 160 la température *T12(t2).*

La puissance *P12(t2)* n'est pas nécessairement différente de la puissance *P12(t1).* Les puissances *P12(t1)* et *P12(t2)* ne sont simplement pas appliquées simultanément, mais alternativement. Toutefois, la puissance *P12(t2)* est de préférence différente de la puissance *P12(t1)* ; cela permet de bénéficier pleinement de la robustesse de l'approche analytique sur laquelle repose l'invention et de fiabiliser encore les calculs en s'affranchissant d'une éventuelle imprécision de mesure 120, 150 suite à l'application 110, 140 de l'une ou l'autre des puissances *P12(t1)* et *P12(t2).* En outre, les puissances *P12(t1)* et *P12(t2)* sont de préférence appliquées 110, 140 de façon suffisamment proche l'une de l'autre dans le temps, soit par exemple à quelques dizaines de secondes d'intervalle, par exemple avec un intervalle inférieur à 60 secondes, plus particulièrement inférieur à 30 secondes et de préférence égal à 10 secondes, pour pouvoir négliger une variation des résistances thermiques *R* et *R'* de chaque côté de la paroi 40. Une limite inférieure de l'intervalle de temps entre les applications successives des puissances *P12(t1)* et *P12(t2)* peut être le temps nécessaire pour atteindre le régime stationnaire de l'évolution en température de chaque circuit résistif 111, 121 ; ce temps étant généralement inférieur à 10 secondes, et par exemple compris entre 2 et 8 secondes.

Les puissances *P12(t1)* et *P12(t2)* sont typiquement comprises entre 1 et 10 W. Elles sont choisies suffisamment faibles pour ne pas remettre en cause l'équilibre thermique général de l'échangeur thermique, et notamment pour ne pas altérer les températures $Tf_1$ et $Tf_{1'}$ des fluides *f* et *f'* à la première hauteur $h_1$ de circulation. L'on peut s'en assurer en paramétrant l'alimentation 110, 140 de sorte que la puissance dissipée par la première bi-sonde 1 soit de l'ordre de 0,02 % de la puissance thermique échangée à travers la paroi 40 de l'échangeur de chaleur.

La question du niveau de puissance à déposer 110, 140 dans la deuxième mono-sonde 2 a fait l'objet de développements analytiques spécifiques non présentés ici. Cependant, elle peut être traitée de la manière suivante. Les contraintes antagonistes qui s'appliquent sont :

- d'une part la nécessité de ne pas déposer une puissance trop forte qui perturberait le fonctionnement de l'échangeur de chaleur (et notamment modifierait les températures $Tf_1$ et $Tf'_1$ de fluides $f$ et $f'$ à la première hauteur $h_1$ de circulation),

- d'autre part la nécessité de déposer une puissance suffisante pour se traduire dans les faits par une modification suffisante de la température $T12$ de la deuxième mono-sonde 12 pour générer un flux thermique $\Phi_{12} = \Phi_{12,s} + \Phi_{12,b}$ (Cf. figure 8) suffisant pour que l'interprétation des mesures de tension 120, 150 soit précise.

On peut alors calculer à l'aide de bilans thermiques simples au moins un paramètre parmi un couple de paramètres comprenant la température $Tf_1$ du fluide $f$ et la résistance thermique $R$, ou plus particulièrement la résistance thermique $R_1$ à la première hauteur $h_1$ de circulation, d'un côté de la paroi 40 et un couple de paramètres comprenant la température $Tf'_1$ du fluide $f'$ et la résistance thermique $R'$, ou plus particulièrement la résistance thermique $R'_1$ à la première hauteur $h_1$ de circulation, de l'autre côté de la paroi 40.

La figure 8 illustre le schéma de principe et la signification des notations employées ci-dessous. On notera que, pour les descriptions données ici, les températures sont données comme températures moyennes de la couche de matériau à laquelle elles se rattachent et que les flux thermiques sont donnés au travers d'interface entre ces couches.

La résistance thermique $Rs_1$ (en $m^2 \cdot K \cdot W^{-1}$) de la première bi-sonde 1 et/ou l'épaisseur e (en mètre) et la conductivité thermique $\lambda$ (en $W \cdot m^{-1} \cdot K^{-1}$) de la première bi-sonde 1 sont connues. De ces paramètres dépend le flux thermique $\Phi_{12,s}$ (en $W/m^2$) traversant l'interface entre les mono-sondes 11 et 12, à compter de chaque instant $t1$ et $t2$ :

$$\Phi_{12,s}(t1) = -\frac{1}{R_{s1}}\big(T11(t1) - T12(t1)\big) = -\frac{\lambda}{e}\big(T11(t1) - T12(t1)\big),$$

et

$$\Phi_{12,s}(t2) = -\frac{1}{R_{s1}}\big(T11(t2) - T12(t2)\big) = -\frac{\lambda}{e}\big(T11(t2) - T12(t2)\big).$$

On peut également écrire l'expression du flux thermique $\Phi_{12,b}$ (en $W/m^2$) traversant l'interface entre la deuxième mono-sonde 12 de la première bi-sonde 1 et la paroi 40, à compter de chaque instant $t1$ et $t2$ :

$$\Phi_{12,b}(t1) = S \cdot P12(t1) - \Phi_{12,s}(t1) = \frac{T12(t1) - Tf'_1}{R_p + R_s + R'} = c(t1),$$

et

$$\Phi_{12,b}(t2) = S \cdot P12(t2) - \Phi_{12,s}(t2) = \frac{T2(t2) - Tf'_1}{R_p + R_s + R'} = c(t2),$$

où

S est la surface de la sonde (en $m^2$), $Tf'_1$ (en K) est la température du fluide circulant du second côté de la paroi 40 à la première hauteur $h_1$ de circulation, $R_p$ est la résistance de la paroi 40, et $R'$ est la résistance thermique du second côté de la paroi 40 (qui peut le cas échéant être remplacée par $R'_1$, la résistance thermique du second côté de la paroi 40 à la première hauteur $h_1$ de circulation).

Ainsi, on en déduit :

$$Tf'_1 = \frac{c(t2)T12(t1) - c(t1)T12(t2)}{c(t2) - c(t1)},$$

et

$$R' = \frac{T12(t1)}{c(t1)} - R_p - R_{s1} - \frac{c(t2)T12(t1) - c(t1)T12(t2)}{c(t1)(c(t2) - c(t1))} \text{ (ou } R'_1).$$

De la même manière, connaissant les relations suivantes :

$$\Phi_{12,s}(t1) = \frac{T11(t1) - Tf_1}{R_{s1} + R},$$

et

$$\Phi_{12,s}(t2) = \frac{T11(t2) - Tf_1}{R_{s1} + R},$$

on en déduit $Tf_1$, la température du fluide $f$ circulant du premier côté de la paroi 40 à la première hauteur $h_1$ de circulation, et $R$, la résistance thermique du premier côté de la paroi 40 (ou $R_1$, la résistance thermique du premier côté de la paroi 40 à la première hauteur $h_1$ de circulation).

Dès lors, il est possible calculer le flux thermique $\Phi_1$ (en W/m$^2$) traversant la paroi 40 à la première hauteur $h_1$ de circulation : $\Phi_1 = \frac{Tf_1 - Tf'_1}{R_p}$. Ce flux pourrait aussi le cas échéant être exprimé sous la forme : $\Phi_1 = \frac{Tf_1 - Tf'_1}{R + R_p + R'}$.

Le flux thermique $\Phi_1$ (en W/m$^2$) traversant la paroi 40 à la première hauteur $h_1$ de circulation peut également être connu via une mesure à puissance déposée $P12$ nulle. En effet, si $P12$ est nulle, le flux thermique $\Phi_1$ est égal au flux $\Phi_{12,b}$, soit

$$\frac{1}{R_{s1}}\big(T11(t1) - T12(t1)\big).$$

Ainsi, les mesures 120, 150 successives avec la première bi-sonde 1 permettent d'obtenir les températures $Tf_1$ et $Tf'_1$ des fluides $f$ et $f'$, les résistances thermiques $R$ et $R'$ (ou $R_1$ et $R'_1$) de chaque côté de la paroi 40, ainsi que le flux thermique $\Phi_1$ traversant la paroi 40, à la première hauteur $h_1$ de circulation. Du fait que chacune des résistances thermiques $R$ et $R'$ calculées est proportionnelle à une somme de résistances thermiques de convection et éventuellement d'encrassement : $R = Rcv + Re$ et $R' = R'cv + R'e$, le procédé permet de discriminer de quel(s) côté(s) de la paroi 40 un encrassement s'est déposé, par exemple depuis une évaluation nominale ou antérieure des conditions de fonctionnement de l'échangeur de chaleur.

Les hypothèses faites ci-dessus permettant d'aboutir à ces résultats consistent à supposer que :

- $P12(t1)$ et $P12(t2)$ ne modifient pas les températures $Tf_1$ et $Tf'_1$, et que
- $P12(t1)$ et $P12(t2)$ sont appliquées 110, 140 successivement, mais de façon suffisamment proche dans le temps, pour pouvoir négliger la variation des résistances thermiques d'encrassement $Re$ et $R'e$ et l'éventuelle variation des résistances thermiques de convection $Rcv$ ou $R'cv$.

Si on fait l'hypothèse supplémentaire de la connaissance a *priori* des valeurs des résistances thermiques de convection $Rcv$ et $R'cv$, par exemple en supposant qu'elles sont identiques à celles correspondant à des conditions de fonctionnement nominales de l'échangeur de chaleur, on peut déduire, des résistances thermiques $R$ et $R'$ calculées, les résistances d'encrassement $Re$ et $R'e$ de chaque côté de la paroi 40.

Cette hypothèse supplémentaire est effectivement nécessaire si seules les conditions de fonctionnement issues de la mise en oeuvre de la seule première bi-sonde 1 sont utilisées. Toutefois, comme décrit ci-après, il est possible grâce au procédé 300 selon l'invention de déterminer, indépendamment de toute hypothèse supplémentaire, des valeurs des résistances thermiques de convection $Rcv$ et $R'cv$, et donc d'en déduire des valeurs des résistances d'encrassement $Re$ et $R'e$ de chaque côté de la paroi 40, en utilisant deux bi-sondes 1, 2 disposées à des hauteurs $h1$ et $h2$ de circulation des fluides $f$ et $f'$ différentes entre elles.

Notons ici que, connaissant la nature des encrassements 50, 50' susceptibles de se former de chaque côté de la paroi 40, et donc leurs conductivités thermiques, il est possible d'évaluer les épaisseurs des encrassements, en fonction des résistances d'encrassement $Re$ et $R'e$ de chaque côté de la paroi 40 ( $Re = \frac{e}{\lambda e}$ , $R'e = \frac{e'}{\lambda' e}$ où $\lambda e$, $\lambda' e$ sont les conductivités thermiques des couches d'encrassement d'épaisseurs $e, e'$). Ainsi, le procédé 100 peut en outre comprendre l'étape suivante : calculer au moins l'une parmi les épaisseurs des encrassements 50, 50', en fonction de l'une respective parmi les résistances d'encrassement *Re* et *R'e* de chaque côté de la paroi 40 et de l'une respective parmi les conductivités thermiques des encrassements de chaque côté de la paroi 40.

Selon un mode de réalisation de l'invention et en référence à la figure 10, le procédé 300 d'évaluation d'au moins une condition de fonctionnement de l'échangeur de chaleur, comprend, après les première et deuxième étapes de détermination 310, 320, une étape de calcul 330 par exemple mise en oeuvre par le dispositif de supervision 30. L'étape de calcul 330 comprend le calcul, au moins en fonction des conditions de fonctionnement précédemment déterminées 310, 320, de paramètres géométriques de l'échangeur thermique et des propriétés physiques d'au moins l'un des fluides *f* et *f'*, d'autres conditions de fonctionnement de l'échangeur de chaleur.

Lorsque les propriétés physiques du fluide *f*, dont au moins sa capacité calorifique, sont connues, les conditions de fonctionnement calculées 330 peuvent comprendre au moins un débit massique *Qm* du fluide *f*, une résistance de convection *Rcv* et une résistance d'encrassement *Re* du premier côté de la paroi 40.

Lorsque les propriétés physiques du fluide *f'*, dont au moins sa capacité calorifique, sont connues, les conditions de fonctionnement calculées 330 peuvent comprendre au moins un débit massique *Q'm* du fluide *f'*, une résistance de convection *R'cv* et une résistance d'encrassement *R'e* du second côté de la paroi 40.

L'étape de calcul 330 est décrite en détails ci-dessous avec des notations dont le sens physique est illustré sur la figure 8. Le calcul 330 est plus particulièrement détaillé ci-dessous dans un contexte particulier choisi pour raison de simplicité, mais le calcul 330 est évidemment adaptable à d'autres contextes, voire généralisable à toute sorte de contextes potentiellement rencontrés, et notamment à toute sorte de géométries de l'échangeur thermique.

Selon le contexte adopté ici afin de détailler le calcul 330, les fluides circulent de part et d'autre de la paroi 40 à contre-courant et la paroi de l'échangeur de chaleur sur laquelle les deux bi-sondes 1, 2 sont disposées est plane. Ce contexte correspond aux illustrations offertes par les figures 7 et 8.

D'un point de vu infinitésimal, l'échange d'énergie stationnaire *dø(x)* entre les fluides *f* et *f'* sur un intervalle de longueur dx (orienté selon l'axe x illustré sur la figure 8) et une largeur constante L (orientée selon l'axe z illustré sur la figure 8) s'écrit :

$$d\emptyset(x) = U(x) \cdot L \cdot \big(Tf(x) - Tf'(x)\big)dx,$$

où *U(x)* est un coefficient de transfert global (en W·m$^{-2}$·K$^{-1}$), défini de façon générale par une équation prenant la forme suivante :

$$\frac{1}{U(x)} = R_e(x) + R_{cv}(x) + R_p(x) + R'_e(x) + R'_{cv}(x).$$

De façon non limitative, l'on peut supposer que la résistance de la paroi *Rp* ne varie pas en fonction de la hauteur de circulation des fluides, du moins entre les hauteurs de circulation *h1* et *h2*.

La puissance totale échangée entre les fluides *f* et *f'* entre les hauteurs de circulation *h1* et *h2* s'écrit :

$$P = \int_{x=h_1}^{x=h_2} d\emptyset(x)\, dx.$$

Plusieurs cas de figures se présentent suivant les hypothèses simplificatrices pouvant s'appliquer au calcul de *U(x)*.

En constatant, ou en faisant l'hypothèse, que *U(x)* est continue et en admettant que (*Tf(x)* - *Tf'(x)*) est de signe constant entre les hauteurs de circulation *h1* et *h2,* on obtient :

$$P = U(h_m) \cdot \int_{x=h_1}^{x=h_2} L \cdot \big(Tf(x) - Tf'(x)\big)\, dx$$

où h$_m$ ∈ {h$_1$, h$_2$}. L'intérêt de cette expression est qu'elle donne à *U(h$_m$)* une signification de coefficient de transfert moyen $\overline{U}$.

Cette expression de la puissance totale échangée entre les fluides *f* et *f'* entre les hauteurs de circulation *h1* et *h2* en fonction du coefficient de transfert $\overline{U}$ est celle que l'on trouve dans les développements liés à l'établissement de la méthode de la différence des températures logarithmiques (ou méthode LMTD pour « logarithmic mean temperature difference » selon la terminologie anglo-saxonne). Appliquer cette méthode amène ici à écrire :

$$P = U(h_m) \cdot S \cdot \Delta T_{ml}, \text{ avec } S = L \cdot (h_2 - h_1).$$

S (en m$^2$) est la surface d'échange et $\Delta T_{ml}$ est la moyenne logarithmique des températures entre les hauteurs de circulation *h1* et *h2*. Elle est fonction de *Tf$_1$, Tf'$_1$, Tf$_2$ et Tf'$_2$* et de la configuration de l'écoulement (contre-courant, co-courant,...).

Plusieurs cas peuvent se présenter suivant les simplifications que l'on adopte, et dont le choix dépend du jugement de l'homme du métier.

Cas 1 - Si l'on admet que la somme des résistances $R_e(x) + R_{cv}(x) + R_p(x)+R'_e(x) + R'_{cv}(x)$ est invariante, alors $U(h_m)$ est donné par une évaluation des résistances thermiques R et $R'$ à une hauteur de circulation quelconque. Par exemple, l'évaluation est celle réalisée par mise en oeuvre de la première bi-sonde 1 à la première hauteur *h1*. Alternativement, l'évaluation est celle réalisée par mise en oeuvre de la deuxième bi-sonde 2 à la deuxième hauteur *h2*. Toute autre bi-sonde disposée de façon *ad hoc* pourrait également servir à cette évaluation.

Cas 2 - Si on admet que la somme des résistances $R_e(x) + R_{cv}(x) + R_p(x)+R'_e(x) + R'_{cv}(x)$ varie faiblement entre les hauteurs de circulation *h1* et *h2,* alors U(h$_m$) peut correspondre à une évaluation moyenne qui peut être approchée, par exemple via l'inverse de la somme des résistances moyennes entre les hauteurs de circulation *h1* et *h2*. Dans ce cas, il peut être utile d'introduire les moyennes suivantes :

$$\overline{R_e + R_{cv}} = \frac{[(R_e+R_{cv})(h_1)+(R_e+R_{cv})(h_2)]}{2} = \frac{R_1+R_2}{2}$$

et

$$\overline{R'_e + R'_{cv}} = \frac{[(R'_e+R'_{cv})(h_1)+(R'_e+R'_{cv})(h_2)]}{2} = \frac{R'_1+R'_2}{2}.$$

Cas 3 - En n'admettant aucune de ces simplifications, on peut approcher, en première approximation, la variation de $R_e(x) + R_{cv}(x) + R_p(x)+R'_e(x) + R'_{cv}(x)$ comme linéaire et intégrer $\int_{x=h_1}^{x=h_2} d\emptyset(x)\, dx$ en conséquence, ce qui amène à une expression qui permet toujours l'expression explicite de la puissance *P* échangée en fonction des résistances et des températures aux hauteurs de circulation *h1* et *h2*, soit

$$P = fct\left((R_e + R_{cv})(h_1),\ (R'_e + R'_{cv})(h_1),\ (R_e + R_{cv})(h_2),\ (R'_e + R'_{cv})(h_2),\ Tf_1,\ Tf_2,\right.$$
$$\left. Tf'_1,\ Tf'_2\right).$$

Considérons les cas 1 et 2 ci-dessus, qui conduisent à l'expression : P = U(h$_m$) · S · $\Delta T_{ml}$. Les termes Re + *Rcv*, R'e + *R'cv et Rp* sont connus aux hauteurs de circulation *h1* et *h2* à partir des mesures et des calculs 110 à 180 effectués par mise en œuvre des bi-sondes 1, 2, indépendamment l'une de l'autre, et de la résistance thermique *Rp* de la paroi. Les moyennes telles qu'introduites ci-dessus conduisant à l'estimation $U(h_m)$ du coefficient de transfert $\overline{U}$ sont donc connues. De la même manière, $\Delta T_{ml}$, est connue à partir des calculs 130, 160. S est une donnée géométrique de la surface d'échange considérée ; elle est supposée connue en tant que paramètre géométrique de l'échangeur thermique. Par emploi des bi-sondes 1, 2, on peut connaitre une valeur de la puissance échangée P.

Or cette puissance s'écrit également :

$$P = Qm \cdot Cp \cdot (Tf_1 - Tf_2) = Q'm \cdot Cp' \cdot (Tf'_1 - Tf'_2),$$

où Qm et Q'm sont les débits massiques respectifs de chaque fluide (en kg·s$^{-1}$), *Cp* et Cp'sont leurs chaleurs spécifiques respectives (en J·kg$^{-1}$·K$^{-1}$).

Comme la puissance échangée P est connue, on peut déduire de ces deux expressions les débits massiques *Qm* et *Q'm* propres à chaque fluide.

Les résistances de convection, *Rcv* et *R'cv,* dépendent des débits massiques *Qm* et *Q'm* et peuvent donc être évaluées à leur tour.

Plus particulièrement, la résistance de convection *Rcv* est de la forme :

$$R_{cv} = \left(\frac{\lambda_f}{d} \cdot a \cdot Rey^b \cdot Pr^c\right)^{-1}$$

où $\lambda_f$ est la conductivité thermique du fluide $f$ (en W·m$^{-1}$·K$^{-1}$), d le diamètre hydraulique (en mètre), *a, b et c* des paramètres connus qui dépendent de la géométrie de l'échangeur de chaleur et *Pr* le nombre de Prandtl qui dépend de la capacité calorifique du fluide *f*, de sa conductivité thermique et de sa viscosité cinématique. L'ensemble de ces grandeurs peuvent être supposées connues, y compris en fonction des conditions, notamment de température et de pression, auxquelles le fluide *f* peut être soumis.

Par ailleurs, le nombre de Reynolds s'écrit :

$$Rey = \frac{\rho \cdot u \cdot d}{\mu}$$

où $\rho$ et $\mu$ sont respectivement la masse volumique (en kg·m$^{-3}$) et la viscosité cinématique (Pa·s) du fluide *f*, *u* est sa vitesse directement reliée au débit massique *Qm.*

On procède par analogie pour calculer 330 la résistance de convection *R'cv.*

A partir de là, toujours sur l'intervalle entre les hauteurs de circulation *h1* et *h2,* en considérant les relations

$Re = \dfrac{e}{\lambda e}$ , $R'e = \dfrac{e'}{\lambda' e}$ , chaque équation $R = Re + Rcv$ et $R' = R'e + R'cv$ (ou au sens des moyennes $\overline{R_e + R_{cv}}$ et $\overline{R'_e + R'_{cv}}$) peut s'écrire comme une équation à une inconnue dont la résolution fournit respectivement *Re* et *R'e* (ou au sens des moyennes $\overline{R_e}$ et $\overline{R'_e}$), ce qui fournit les résistances thermiques d'encrassement de part et d'autre de la paroi 40.

Un raisonnement similaire s'applique dans le cas 3.

Ainsi le procédé 300 mettant en oeuvre deux bi-sondes 1 et 2, en plus des valeurs que l'on obtient avec une bi-sonde, à savoir les températures *Tf* et *Tf'* des fluides *f* et *f'* de part et d'autre de la paroi 40, les résistances thermiques *R* et *R'* de chaque côté de la paroi 40, ainsi que le flux thermique $\Phi$, permet aussi d'obtenir les débits massiques *Qm* et *Q'm* des fluides *f* et *f'* de part et d'autre de la paroi 40, ainsi que les résistances thermiques d'encrassement *Re* et *R'e* de part et d'autre de la paroi 40, indépendamment de toute hypothèse sur les résistances thermiques de convection *Rcv* et *R'cv* et en particulier sans avoir à faire l'hypothèse selon laquelle les régimes hydrauliques sont stables dans le temps, i.e. que $R_{cv}$ et $R'_{cv}$ ne varient pas dans le temps.

Au vu de ce qui précède, on s'aperçoit que la différence entre les hauteurs $h_1$ et $h_2$ auxquelles sont respectivement situées les première et deuxième bi-sondes 1, 2 est de préférence paramétrée de sorte que des différences de températures $Tf_1$-$Tf_2$ du fluide *f* et $Tf'_1$-$Tf'_2$ du fluide *f'* entre les hauteurs $h_1$ et $h_2$ soient perceptibles par le dispositif de mesure 20 au moins comme une différence de mesures 120, 150 de tension au moins entre une mono-sonde 11, 12 de la première bi-sonde 1 et une mono-sonde 21, 22 de la deuxième bi-sonde 2.

L'invention n'est pas limitée aux modes de réalisations précédemment décrits et s'étend à tous les modes de réalisation couverts par les revendications.

Par exemple, l'emploi de chaque bi-sonde 1, 2 tel que décrit ci-dessus, selon lequel on réalise un dépôt 110, 140 de puissance *P12* dans la mono-sonde 12, permet de déterminer un nombre de quantités d'intérêt pour l'ingénieur ($Tf_1$, $Tf'_1$, *R ou $R_1$, R' ou $R'_1$*, ...). La plupart des développements analytiques présentés ci-dessus sont fournis dans ce contexte. Un dépôt de puissance dans la mono-sonde 11 conduirait à des développements analytiques similaires, quoique légèrement différents, qui permettraient *in fine* de déterminer les mêmes quantités d'intérêt en faisant les mêmes hypothèses. La formulation de ces développements non présentés ici est jugée relever des compétences ordinaires de l'homme de l'art, au vu des développements analytiques fournis.

Par exemple, les étapes 110 à 130 et 140 à 160 peuvent être répétées à compter de deux instants *t3* et *t4* différents entre eux et ultérieurs aux instants *t1* et *t2*. Chacune des étapes de calcul 170, 180 et 330 peut donc être également répétée. De la sorte, une éventuelle différence entre les résultats de chacune des étapes de calcul 170, 180 et 330 peut être représentative d'une évolution, voire d'une dégradation des conditions de fonctionnement de l'échangeur de chaleur et peut permettre notamment une prise de décision quant à la réalisation d'une opération de remise en état ou de remplacement de la paroi 40, voire de l'échangeur de chaleur. Une telle répétition d'étapes peut être programmée par exemple par intervalles de 10 minutes, de 24 heures, de 1 mois, de 1 an, etc. et/ou par exemple dès une première mise en fonctionnement de l'échangeur thermique et après chaque opération d'entretien et de maintenance de l'échangeur thermique.

**Revendications**

**1.** Système d'évaluation (0) d'au moins une condition de fonctionnement d'un échangeur de chaleur, comprenant :

- au moins deux bi-sondes (1, 2) de température comprenant chacune un empilement de deux mono-sondes (11, 12, 21, 22) de température thermiquement et électriquement isolées entre elles, et
- une paroi (40) d'un échangeur thermique à travers laquelle un transfert thermique est destiné à s'opérer entre deux fluides $f$ et $f'$ circulant de part et d'autre de la paroi (40) et sur laquelle est susceptible de se déposer un encrassement (50, 50'), chaque mono-sonde (11, 12, 21, 22) de chaque bi-sonde (1, 2) étant destinée à être reliée fonctionnellement à :
- un dispositif d'alimentation électrique (10) de chaque mono-sonde (11, 12, 21, 22),
- un dispositif de mesure de courant électrique (20) dans chaque mono-sonde (11, 12, 21, 22), et
- un dispositif de supervision (30) du dispositif d'alimentation (10) et du dispositif de mesure (20),

chaque bi-sonde (1, 2) étant disposée sur l'un parmi un premier côté et un second côté de la paroi (40) de l'échangeur de chaleur,
une première bi-sonde (1) étant située à une première hauteur $h_1$ de circulation des fluides $f$ et $f'$ et une deuxième bi-sonde (2) étant située à une deuxième hauteur $h_2$ de circulation des fluides $f$ et $f'$, la première hauteur $h_1$ étant différente de la deuxième hauteur $h_2$,
chaque bi-sonde (1, 2) présentant une résistance thermique $Rs_1$, $Rs_2$ connue, la paroi (40) présentant une résistance thermique Rp connue et l'échangeur thermique présentant des paramètres géométriques connus.

2. Procédé (300) d'évaluation d'au moins une condition de fonctionnement d'un échangeur de chaleur, mettant en œuvre un système d'évaluation (0) selon la revendication 1, destiné à opérer un transfert thermique entre deux fluides $f$ et $f'$, au moins l'un des fluides $f$ et $f'$ présentant des propriétés physiques connues, le procédé comprenant les étapes suivantes mises en œuvre en utilisant les dispositifs d'alimentation (10), de mesure (20) et de supervision (30) :

- une première étape de détermination (310), à l'aide de la première bi-sonde (1) et en fonction de la résistance thermique $Rs_1$ de la première bi-sonde (1) et de la résistance thermique $Rp$ de la paroi (40), d'au moins les conditions de fonctionnement suivantes : la température $Tf_1$ du fluide $f$ du premier côté de la paroi (40) et la température $Tf'_1$ du fluide $f'$ du second côté de la paroi (40), à la première hauteur $h_1$ de circulation, et
- une deuxième étape de détermination (320), à l'aide de la deuxième bi-sonde (2) et en fonction de la résistance thermique $Rs_2$ de la deuxième bi-sonde (2) et de la résistance thermique $Rp$ de la paroi (40), d'au moins les conditions de fonctionnement suivantes : la température $Tf_2$ du fluide $f$ du premier côté de la paroi (40), la température $Tf'_2$ du fluide $f'$ du second côté de la paroi (40), la résistance thermique $R_2$ du premier côté de la paroi (40) et la résistance thermique $R'_2$ du second côté de la paroi (40), à la deuxième hauteur $h_2$ de circulation,

le procédé comprenant en outre :

- une étape de calcul (330) mise en œuvre par le dispositif de supervision (30), au moins en fonction des conditions de fonctionnement précédemment déterminées (310, 320), des paramètres géométriques de l'échangeur thermique et des propriétés physiques d'au moins l'un des fluides $f$ et $f'$, d'au moins l'une parmi les conditions de fonctionnement respectives suivantes :
- un débit du fluide $f$, une résistance de convection $Rcv$ et une résistance d'encrassement $Re$ du premier côté de la paroi (40), et
- un débit du fluide $f'$, une résistance de convection $R'cv$ et une résistance d'encrassement $R'e$ du second côté de la paroi (40),

procédé dans lequel l'une au moins des première et deuxième étapes de détermination (310, 320) comprend les étapes suivantes réalisées à l'aide de l'une respective parmi les première et deuxième bi-sondes (1,2) :
à compter d'un premier instant $t1$ :

- alimenter (110) les mono-sondes (11, 12, 21, 22) de l'une respective parmi les première et deuxième bi-sondes (1,2) avec des courants électriques d'intensités différentes,
- mesurer (120) le courant électrique dans chacune des mono-sondes (11, 12, 21, 22), et
- calculer (130) la température $T11(t1)$, $T12(t1)$, $T21(t1)$, $T22(t1)$ de chaque mono-sonde (11, 12, 21, 22) au moins en fonction de la mesure de courant correspondante, puis

à compter d'un deuxième instant $t2$, différent du premier instant $t1$ :

- alimenter (140) les mono-sondes (11, 12, 21, 22) de l'une respective parmi les première et deuxième bi-sondes

(1,2) avec des courants électriques d'intensités différentes,
- mesurer (150) le courant électrique dans chacune des mono-sondes (11, 12, 21, 22), et
- calculer (160) la température $T11(t2)$, $T12(t2)$, $T21(t2)$, $T22(t2)$ de chaque mono-sonde (11, 12, 21, 22) au moins en fonction de la mesure de courant correspondante, et dans lequel

l'une des première et deuxième étapes de détermination (310, 320) comprend en outre l'une correspondante parmi les étapes suivantes :

- une première étape de calcul (170), en fonction de la résistance thermique $Rs_1$ de la première bi-sonde (1), de la résistance thermique $Rp$ de la paroi (40) et des températures $T11(t1)$, $T12(t1)$, $T11(t2)$ et $T12(t2)$ des mono-sondes (11, 12), des conditions de fonctionnement suivantes : la température $Tf_1$ du fluide $f$ du premier côté de la paroi (40) et la température $Tf'_1$ du fluide $f'$ du second côté de la paroi (40), à la première hauteur $h_1$ de circulation,
- une deuxième étape de calcul (180), en fonction de la résistance thermique $Rs_2$ de la deuxième bi-sonde (2), de la résistance thermique $Rp$ de la paroi (40) et des températures $T21(t1)$, $T22(t1)$, $T21(t2)$ et $T22(t2)$ des mono-sondes (21, 22), des conditions de fonctionnement suivantes : la température $Tf_2$ du fluide $f$ du premier côté de la paroi (40), la température $Tf'_2$ du fluide $f'$ du second côté de la paroi (40), la résistance thermique $R_2$ du premier côté de la paroi (40) et la résistance thermique $R'_2$ du second côté de la paroi (40), à la deuxième hauteur $h_2$ de circulation.

3. Procédé (300) selon la revendication précédente, dans lequel la deuxième étape de détermination (310) comprend en outre la détermination, à l'aide de la première bi-sonde (1) et en fonction de la résistance thermique $Rs_1$ de la première bi-sonde (1) et de la résistance thermique $Rp$ de la paroi (40), de la résistance thermique $R_1$ du premier côté de la paroi (40) et de la résistance thermique $R'_1$ du second côté de la paroi (40), à la première hauteur $h_1$ de circulation, en tant que conditions de fonctionnement.

4. Procédé (300) selon la revendication précédente, dans lequel l'étape de calcul (330) est réalisée en outre en fonction de la résistance thermique $R_1$ et de la résistance thermique $R'_1$.

5. Procédé (300) selon la revendication précédente, dans lequel l'étape de calcul (330) est réalisée en fonction d'une moyenne des résistances thermiques $R_1$ et $R_2$ et d'une moyenne des résistances thermiques $R'_1$ et $R'_2$.

6. Procédé (300) selon la revendication 4, dans lequel l'étape de calcul (330) est paramétrée par extrapolation, de préférence linéaire, d'une évolution de résistance thermique entre les hauteurs $h_1$ et $h_2$ d'au moins un côté de la paroi (40) en fonction des valeurs correspondantes parmi : les résistances thermiques $R_1$ et $R_2$ et les résistances thermiques $R'_1$ et $R'_2$.

7. Procédé (300) selon l'une quelconque des revendications 2 à 6, dans lequel la différence entre les hauteurs $h_1$ et $h_2$ auxquelles sont respectivement situées les première et deuxième bi-sondes (1,2) est paramétrée de sorte que des différences de températures $Tf_1$-$Tf_2$ du fluide $f$ et $Tf'_1$-$Tf'_2$ du fluide $f'$ entre les hauteurs $h_1$ et $h_2$ soient perceptibles par le dispositif de mesure (20) comme une différence de mesures (120, 150) de courant au moins entre une mono-sonde (11, 12) de la première bi-sonde (1) et une mono-sonde (21, 22) de la deuxième bi-sonde (2).

8. Procédé (300) selon l'une quelconque des revendications 2 à 7, dans lequel les propriétés physiques de chaque fluide $f$, $f'$ comprennent la capacité thermique et le cas échéant la masse volumique, la conductivité thermique et la viscosité dynamique.

9. Procédé (300) selon l'une quelconque des revendications 2 à 8, dans lequel les paramètres géométriques de l'échangeur thermique comprennent une surface d'échange thermique comprise entre les hauteurs $h_1$ et $h_2$ et le cas échéant un diamètre hydraulique et trois paramètres a, $b$ et c dépendant de la géométrie de l'échangeur thermique.

10. Procédé (300) selon l'une quelconque des revendications 2 à 9, dans lequel l'étape de calcul (330) comprend au moins l'un parmi le calcul du débit du fluide $f$ et le calcul du débit du fluide $f'$ en fonction des conditions de fonctionnement précédemment déterminées (310, 320), d'une surface d'échange thermique comprise entre les hauteurs $h_1$ et $h_2$ et de l'une respective parmi la capacité calorifique du fluide $f$ et la capacité calorifique du fluide $f'$.

11. Procédé (300) selon l'une quelconque des revendications 2 à 10, dans lequel l'étape de calcul (330) comprend le calcul de l'une au moins parmi la résistance de convection *Rcv* du premier côté de la paroi (40) et la résistance de convection *R'cv* du second côté de la paroi (40) en fonction :

- des conditions de fonctionnement précédemment déterminées (310, 320),
- d'une surface d'échange thermique entre les hauteurs $h_1$ et $h_2$, d'un diamètre hydraulique et de trois paramètres a, *b* et c dépendant de la géométrie de l'échangeur thermique, et
- de la masse volumique, la capacité calorifique, la conductivité thermique et la viscosité dynamique de l'un respectif des fluides *f* et *f'*.

**12.** Procédé (300) selon la revendication précédente, dans lequel l'étape de calcul (330) comprend le calcul de l'une au moins parmi la résistance d'encrassement Re du premier côté de la paroi (40) et la résistance d'encrassement *R'e* du second côté de la paroi (40), en fonction de l'une respective parmi la résistance de convection *Rcv* du premier côté de la paroi (40) et la résistance de convection *R'cv* du second côté de la paroi (40).

**13.** Procédé (100) selon l'une des revendications 2 à 12, dans lequel les première et deuxième étapes de détermination (310, 320) et l'étape de calcul (330) sont répétées, de sorte que le dépassement d'une valeur seuil prédéterminée par l'une au moins parmi :

- une différence entre des débits du fluide *f*,
- une différence entre des débits du fluide *f'*,
- une différence entre des résistances de convection *Rcv,*
- une différence entre des résistances de convection *R'cv,*
- une différence entre des résistances d'encrassement *Re,* et
- une différence entre des résistances d'encrassement *R'e,*

soit représentative d'une évolution des conditions de fonctionnement de l'échangeur de chaleur et le cas échéant permette une prise de décision quant à la réalisation d'une opération de remise en état ou de remplacement de la paroi (40), voire de l'échangeur de chaleur.

**14.** Produit programme d'ordinateur comprenant des instructions, qui, lorsqu'elles sont interprétées et exécutées par au moins un processeur qui contrôle un système selon la revendication 1 effectuent au moins les première et deuxième étapes de détermination (310, 320) et l'étape de calcul (330) du procédé (300) selon l'une quelconque des revendications 2 à 13.

**Patentansprüche**

**1.** System zur Beurteilung (0) mindestens einer Betriebsbedingung eines Wärmetauschers, umfassend:

- mindestens zwei Doppel-Temperaturfühler (1, 2), die jeweils einen Stapel aus zwei Einzel-Temperaturfühlern (11, 12, 21, 22) umfassen, die thermisch und elektrisch voneinander isoliert sind, und
- eine Wand (40) eines Wärmetauschers, durch die eine Wärmeübertragung zwischen zwei beiderseits der Wand (40) zirkulierenden Fluiden *f* und *f'* erfolgen soll, und an der sich eine Ablagerung (50, 50') anlagern kann,

wobei jeder Einzelfühler (11, 12, 21, 22) jedes Doppelfühlers (1, 2) dazu bestimmt ist, betriebsmäßig mit:

- einer Vorrichtung zur elektrischen Speisung (10) jedes Einzelfühlers (11, 12, 21, 22),
- einer Vorrichtung zum Messen von elektrischem Strom (20) in jedem Einzelfühler (11, 12, 21, 22), und
- einer Vorrichtung zur Überwachung (30) der Speisevorrichtung (10) und der Messvorrichtung (20)

verbunden zu werden,
wobei jeder Doppelfühler (1, 2) auf einer aus einer ersten Seite und einer zweiten Seite der Wand (40) des Wärmetauschers angeordnet ist,
wobei sich ein erster Doppelfühler (1) auf einer ersten Zirkulationshöhe $h_1$ der Fluide *f* und *f'* befindet und sich ein zweiter Doppelfühler (2) auf einer zweiten Zirkulationshöhe $h_2$ der Fluide *f* und *f'* befindet, wobei sich die erste Höhe $h_1$ von der zweiten Höhe $h_2$ unterscheidet,
wobei jeder Doppelfühler (1, 2) einen bekannten Wärmewiderstand $Rs_1$, $Rs_2$ aufweist, die Wand (40) einen bekannten Wärmewiderstand *Rp* aufweist, und der Wärmetauscher bekannte geometrische Parameter aufweist.

**2.** Verfahren (300) zur Beurteilung, unter Einsatz eines Beurteilungssystems (0) nach Anspruch 1, mindestens einer Betriebsbedingung eines Wärmetauschers, der dazu bestimmt ist, eine Wärmeübertragung zwischen zwei Fluiden $f$ und $f'$ vorzunehmen, wobei mindestens eines der Fluide $f$ und $f'$ bekannte physikalische Eigenschaften aufweist, wobei das Verfahren die folgenden Schritte umfasst, die unter Verwendung der Speise- (10), Mess- (20) und Überwachungsvorrichtung (30) umgesetzt werden:

- einen ersten Schritt des Bestimmens (310) mindestens der folgenden Betriebsbedingungen mit Hilfe des ersten Doppelfühlers (1) und in Abhängigkeit vom Wärmewiderstand $Rs_1$ des ersten Doppelfühlers (1) und vom Wärmewiderstand $R_p$ der Wand (40): der Temperatur $Tf_1$ des Fluids $f$ auf der ersten Seite der Wand (40) und der Temperatur $Tf'_1$ des Fluids $f$ auf der zweiten Seite der Wand (40), auf der ersten Zirkulationshöhe $h_1$, und
- einen zweiten Schritt des Bestimmens (320) mindestens der folgenden Betriebsbedingungen mit Hilfe des zweiten Doppelfühlers (2) und in Abhängigkeit vom Wärmewiderstand $Rs_2$ des zweiten Doppelfühlers (2) und des Wärmewiderstands $Rp$ der Wand (40): der Temperatur $Tf_2$ des Fluids $f$ auf der ersten Seite der Wand (40), der Temperatur $Tf'_2$ des Fluids $f$ auf der zweiten Seite der Wand (40), des Wärmewiderstands $R_2$ auf der ersten Seite der Wand (40), und des Wärmewiderstands $R'_2$ auf der zweiten Seite der Wand (40), auf der zweiten Zirkulationshöhe $h_2$,

wobei das Verfahren weiter umfasst:

- einen von der Überwachungsvorrichtung (30) umgesetzten Schritt des Berechnens (330) mindestens einer aus den folgenden jeweiligen Betriebsbedingungen mindestens in Abhängigkeit von den zuvor bestimmten Betriebsbedingungen (310, 320), den geometrischen Parametern des Wärmetauschers und den physikalischen Eigenschaften mindestens eines der Fluide $f$ und $f'$:
- einer Strömung des Fluids $f$, eines Konvektionswiderstands $Rcv$ und eines Ablagerungswiderstands $Re$ auf der ersten Seite der Wand (40), und
- einer Strömung des Fluids $f'$, eines Konvektionswiderstand $R'cv$ und eines Ablagerungswiderstand $R'e$ auf der zweiten Seite der Wand (40),

wobei bei dem Verfahren mindestens einer aus dem ersten und dem zweiten Bestimmungsschritt (310, 320) die folgenden Schritte umfasst, die mit Hilfe eines jeweiligen aus dem ersten und dem zweiten Doppelfühler (1, 2) ausgeführt werden:
beginnend ab einem ersten Zeitpunkt $t1$:

- Speisen (110) der Einzelfühler (11, 12, 21, 22) eines jeweiligen aus dem ersten und dem zweiten Doppelfühler (1, 2) mit elektrischen Strömen unterschiedlicher Stärken,
- Messen (120) des elektrischen Stroms in jedem der Einzelfühler (11, 12, 21, 22), und
- Berechnen (130) der Temperatur $T11(t1)$, $T12(t1)$, $T21(t1)$, $T22(t1)$ jedes Einzelfühlers (11, 12, 21, 22) mindestens in Abhängigkeit von der entsprechenden Strommessung, und anschließend

beginnend ab einem zweiten Zeitpunkt $t2$, der sich vom ersten Zeitpunkt $t1$ unterscheidet:

- Speisen (140) der Einzelfühler (11, 12, 21, 22) eines jeweiligen aus dem ersten und dem zweiten Doppelfühler (1, 2) mit elektrischen Strömen unterschiedlicher Stärken,
- Messen (150) des elektrischen Stroms in jedem der Einzelfühler (11, 12, 21, 22), und
- Berechnen (160) der Temperatur $T11(t2)$, $T12(t2)$, $T21(t2)$, $T22(t2)$ jedes Einzelfühlers (11, 12, 21, 22) mindestens in Abhängigkeit von der entsprechenden Strommessung, und wobei

einer aus dem ersten und dem zweiten Bestimmungsschritt (310, 320) weiter einen entsprechenden aus den folgenden Schritten umfasst:

- einen ersten Schritt des Berechnens (170) der folgenden Betriebsbedingungen in Abhängigkeit vom Wärmewiderstand $Rs_1$ des ersten Doppelfühlers (1), vom Wärmewiderstand $Rp$ der Wand (40) und von den Temperaturen $T11(t1)$, $T12(t1)$, $T11(t2)$ und $T12(t2)$ der Einzelfühler (11, 12): der Temperatur $Tf_1$ des Fluids $f$ auf der ersten Seite der Wand (40) und der Temperatur $Tf'_1$ des Fluids $f$ auf der zweiten Seite der Wand (40), auf der ersten Zirkulationshöhe $h_1$,
- einen zweiten Schritt des Berechnens (180) der folgenden Betriebsbedingungen in Abhängigkeit vom Wärmewiderstand $Rs_2$ des zweiten Doppelfühlers (2), des Wärmewiderstands $Rp$ der Wand (40) und der Temperaturen $T21(t1)$, $T22(t1)$, $T21(t2)$ und $T22(t2)$ der Einzelfühler (21, 22): der Temperatur $Tf_2$ des Fluids $f$ auf der ersten Seite der Wand (40), der Temperatur $Tf_2$ des Fluids $f'$ auf der zweiten Seite der Wand (40), des Wärmewiderstands $R_2$ auf der ersten Seite der Wand (40) und des Wärmewiderstands $R'_2$ auf der zweiten Seite der Wand (40), auf der zweiten Zirkulationshöhe $h_2$.

3. Verfahren (300) nach dem vorstehenden Anspruch, wobei der zweite Bestimmungsschritt (310) weiter das Bestimmen, mit Hilfe des ersten Doppelfühlers (1) und in Abhängigkeit vom Wärmewiderstand $Rs_1$ des ersten Doppelfühlers (1) und vom Wärmewiderstand $Rp$ der Wand (40), des Wärmewiderstands $R_1$ auf der ersten Seite der Wand (40) und des Wärmewiderstands $R'_1$ auf der zweiten Seite der Wand (40), auf der ersten Zirkulationshöhe $h_1$, als Betriebsbedingungen umfasst.

4. Verfahren (300) nach dem vorstehenden Anspruch, wobei der Berechnungsschritt (330) weiter in Abhängigkeit vom Wärmewiderstand $R_1$ und vom Wärmewiderstand $R'_1$ ausgeführt wird.

5. Verfahren (300) nach dem vorstehenden Anspruch, wobei der Berechnungsschritt (330) in Abhängigkeit von einem Durchschnitt der Wärmewiderstände $R_1$ und $R_2$ und von einem Durchschnitt der Wärmewiderstände $R'_1$ und $R'_2$ ausgeführt wird.

6. Verfahren (300) nach Anspruch 4, wobei der Berechnungsschritt (330) mittels, vorzugsweise linearer, Extrapolation einer Entwicklung des Wärmewiderstands zwischen den Höhen $h_1$ und $h_2$ auf mindestens einer Seite der Wand (40) in Abhängigkeit von den entsprechenden Werten parametrisiert wird aus: den Wärmewiderständen $R_1$ und $R_2$ und den Wärmewiderständen $R'_1$ und $R'_2$.

7. Verfahren (300) nach einem der Ansprüche 2 bis 6, wobei die Differenz zwischen den Höhen $h_1$ und $h_2$, auf denen sich jeweils der erste und der zweite Doppelfühler (1, 2) befinden, so parametrisiert wird, dass Temperaturdifferenzen $Tf_1$-$Tf_2$ des Fluids $f$ und $Tf'_1$-$Tf'_2$ des Fluids $f'$ zwischen den Höhen $h_1$ und $h_2$ von der Messvorrichtung (20) als eine Differenz von Strommessungen (120, 150) mindestens zwischen einem Einzelfühler (11, 12) des ersten Doppelfühlers (1) und einem Einzelfühler (21, 22) des zweiten Doppelfühlers (2) wahrgenommen werden können.

8. Verfahren (300) nach einem der Ansprüche 2 bis 7, wobei die physikalischen Eigenschaften jedes Fluids $f$, $f'$ die Wärmekapazität und gegebenenfalls die Dichte, die Wärmeleitfähigkeit und die dynamische Viskosität umfassen.

9. Verfahren (300) nach einem der Ansprüche 2 bis 8, wobei die geometrischen Parameter des Wärmetauschers eine Wärmeaustauschfläche, die zwischen den Höhen $h_1$ und $h_2$ liegt, und gegebenenfalls einen hydraulischen Durchmesser und drei Parameter $a$, $b$ und $c$ umfassen, die von der Geometrie des Wärmetauschers abhängen.

10. Verfahren (300) nach einem der Ansprüche 2 bis 9, wobei der Berechnungsschritt (330) mindestens eines aus dem Berechnen der Strömung des Fluids $f$ und dem Berechnen der Strömung des Fluids $f'$ in Abhängigkeit von den zuvor bestimmten Betriebsbedingungen (310, 320), einer Wärmeaustauschfläche, die zwischen den Höhen $h_1$ und $h_2$ liegt, und einer jeweiligen aus der Wärmekapazität des Fluids $f$ und der Wärmekapazität des Fluids $f'$ umfasst.

11. Verfahren (300) nach einem der Ansprüche 2 bis 10, wobei der Berechnungsschritt (330) das Berechnen von mindestens einem aus dem Konvektionswiderstand $Rcv$ auf der ersten Seite der Wand (40) und dem Konvektionswiderstand $R'cv$ auf der zweiten Seite der Wand (40) in Abhängigkeit von:

   - den zuvor bestimmten Betriebsbedingungen (310, 320),
   - einer Wärmeaustauschfläche zwischen den Höhen $h_1$ und $h_2$, einem hydraulischen Durchmesser und drei Parametern $a$, $b$ und $c$, die von der Geometrie des Wärmetauschers abhängen, und
   - der Dichte, der Wärmekapazität, der Wärmeleitfähigkeit und der dynamischen Viskosität eines jeweiligen der Fluide $f$ und $f'$

   umfasst.

12. Verfahren (300) nach dem vorstehenden Anspruch, wobei der Berechnungsschritt (330) das Berechnen von mindestens einem aus dem Ablagerungswiderstand Re auf der ersten Seite der Wand (40) und dem Ablagerungswiderstand R'e auf der zweiten Seite der Wand (40) in Abhängigkeit von einem jeweiligen aus dem Konvektionswiderstand $Rcv$ auf der ersten Seite der Wand (40) und dem Konvektionswiderstand $R'cv$ auf der zweiten Seite der Wand (40) umfasst.

**13.** Verfahren (100) nach einem der Ansprüche 2 bis 12, wobei der erste und der zweite Bestimmungsschritt (310, 320) und der Berechnungsschritt (330) wiederholt werden, sodass die Überschreitung eines vorbestimmten Schwellenwerts durch mindestens eines aus:

- einer Differenz zwischen Strömungen des Fluids *f*,
- einer Differenz zwischen Strömungen des Fluids *f*,
- einer Differenz zwischen Konvektionswiderständen *Rcv,*
- einer Differenz zwischen Konvektionswiderständen *R'cv,*
- einer Differenz zwischen Ablagerungswiderständen *Re,* und
- einer Differenz zwischen Ablagerungswiderständen *R'e*

für eine Entwicklung der Betriebsbedingungen des Wärmetauschers repräsentativ ist und gegebenenfalls das Fällen einer Entscheidung im Hinblick auf die Ausführung eines Vorgangs zur Instandsetzung oder zum Austausch der Wand (40), ja sogar des Wärmetauschers, ermöglicht.

**14.** Computerprogrammprodukt, das Anweisungen umfasst, die, wenn sie von mindestens einem Prozessor, der ein System nach Anspruch 1 steuert, interpretiert und ausgeführt werden, mindestens den ersten und den zweiten Bestimmungsschritt (310, 320) und den Berechnungsschritt (330) des Verfahrens (300) nach einem der Ansprüche 2 bis 13 bewirken.

**Claims**

**1.** A system (0) for evaluating at least one operating condition of a heat exchanger, comprising:

- at least two double temperature probes (1, 2) each comprising a stack of two single temperature probes (11, 12, 21, 22) thermally and electrically isolated from one another, and
- a wall (40) of a heat exchanger through which a heat transfer is intended to take place between two fluids *f* and *f'* circulating on either side of the wall (40) and on which a fouling (50, 50') is capable of being deposited,

each single probe (11, 12, 21, 22) of each double probe (1, 2) being intended to be functionally connected to:

- a power supply device (10) for each single probe (11, 12, 21, 22),
- an electric current measuring device (20) in each single probe (11, 12, 21, 22), and
- a device (30) for monitoring the power supply device (10) and the measuring device (20),

each double probe (1, 2) being disposed on one of a first side and a second side of the wall (40) of the heat exchanger, a first double probe (1) being located at a first height $h_1$ of circulation of fluids f and f' and a second double probe (2) being located at a second height $h_2$ of circulation of fluids f and f', the first height $h_1$ being different from the second height $h_2$,
each double probe (1, 2) having a known thermal resistance $Rs_1$, $R_{s2}$, the wall (40) having a known thermal resistance $R_p$ and the heat exchanger having known geometric parameters.

**2.** The method (300) for evaluating at least one operating condition of a heat exchanger, implementing an evaluation system (0) according to claim 1, intended to operate a heat transfer between two fluids f and f', at least one of the fluids f and f' having known physical properties, the method comprising the following steps implemented using the power supply (10), measurement (20) and supervision (30) devices:

- a first step of determining (310), using the first double probe (1) and according to the thermal resistance $R_{s1}$, of the first double probe (1) and the thermal resistance $R_p$ of the wall (40), at least the following operating conditions: the temperature $Tf_1$ of the fluid f on the first side of the wall (40) and the temperature $Tf'_1$ of the fluid f' on the second side of the wall (40), at the first circulation height $h_1$, and
- a second step of determining (320), using the second double probe (2) and according to the thermal resistance $Rs_2$ of the second double probe (2) and the thermal resistance Rp of the wall (40), at least the following operating conditions: the temperature $Tf_2$ of the fluid f on the first side of the wall (40), the temperature $Tf'_2$ of the fluid f' on the second side of the wall (40), the thermal resistance $R_2$ on the first side of the wall (40) and the thermal resistance $R'_2$ on the second side of the wall (40), at the second circulation height $h_2$,

the method further comprising:

- a calculation step (330) implemented by the supervision device (30), at least according to the previously determined operating conditions (310, 320), the geometric parameters of the heat exchanger and the physical properties of at least one of the fluids f and f', of at least one of the following respective operating conditions:
    - a fluid flow rate f, a convection resistance Rcv and a fouling resistance Re on the first side of the wall (40), and
    - a fluid flow rate f', a convection resistance R'cv and a fouling resistance R'e on the second side of the wall (40),

method wherein at least one of the first and second determination steps (310, 320) comprises the following steps performed using the respective one of the first and second double probes (1, 2):
from a first instant t1:

- supplying (110) the single probes (11, 12, 21, 22) of the respective one of the first and second double probes (1, 2) with electric currents of different intensities,
- measuring (120) the electric current in each of the single probes (11, 12, 21, 22), and
- calculating (130) the temperature T11(t1), T12(t1), T21(t1), T22(t1) of each single probe (11, 12, 21, 22) at least according to the corresponding current measurement, then

from a second instant t2, different from the first instant t1:

- supplying (140) the single probes (11, 12, 21, 22) of the respective one of the first and second double probes (1, 2) with electric currents of different intensities,
- measuring (150) the electric current in each of the single probes (11, 12, 21, 22), and
- calculating (160) the temperature T11(t2), T12(t2), T21(t2), T22(t2) of each single probe (11, 12, 21, 22) at least according to the corresponding current measurement, and wherein

one of the first and second determination steps (310, 320) further comprises the corresponding one of the following steps:

- a first step of calculating (170), according to the thermal resistance $Rs_1$ of the first double probe (1), the thermal resistance Rp of the wall (40) and the temperatures T11(t1), T12(t1), T11(t2) and T12(t2) of the single probes (11, 12), the following operating conditions: the temperature $Tf_1$ of the fluid f on the first side of the wall (40) and the temperature $Tf'_1$ of the fluid f' on the second side of the wall (40), at the first circulation height $h_1$,
- a second step of calculating (180), according to the thermal resistance $Rs_2$ of the second double probe (2), the thermal resistance Rp of the wall (40) and the temperatures T21(t1), T22(t1), T21(t2) and T22(t2) of the single probes (21, 22), the following operating conditions: the temperature $Tf_2$ of the fluid f on the first side of the wall (40), the temperature $Tf'_2$ of the fluid f' on the second side of the wall (40), the thermal resistance $R_2$ on the first side of the wall (40) and the thermal resistance $R'_2$ on the second side of the wall (40), at the second circulation height $h_2$.

3. The method (300) according to the preceding claim, wherein the second determination step (310) further comprises determining, using the first double probe (1) and according to the thermal resistance $Rs_1$ of the first double probe (1) and the thermal resistance Rp of the wall (40), the thermal resistance $R_1$ on the first side of the wall (40) and the thermal resistance $R'_1$ on the second side of the wall (40), at the first circulation height $h_1$, as operating conditions.

4. The method (300) according to the preceding claim, wherein the calculation step (330) is further performed according to the thermal resistance $R_1$ and the thermal resistance $R'_1$.

5. The method (300) according to the preceding claim, wherein the calculation step (330) is carried out according to an average of the thermal resistances $R_1$ and $R_2$ and to an average of the thermal resistances $R'_1$ and $R'_2$.

6. The method (300) according to claim 4, wherein the calculation step (330) is set by extrapolation, which is preferably linear, of an evolution of thermal resistance between the heights $h_1$ and $h_2$ of at least one side of the wall (40) according to the corresponding values among: the thermal resistances $R_1$ and $R_2$ and the thermal resistances $R'_1$ and $R'_2$.

7. The method (300) according to any one of claims 2 to 6, wherein the difference between the heights $h_1$ and $h_2$ at which the first and second double probes (1, 2) are respectively located is set so that differences of temperatures

$Tf_1$-$Tf_2$ of the fluid f and $Tf'_1$-$Tf'_2$ of the fluid f' between the heights $h_1$ and $h_2$ are perceptible by the measuring device (20) as a difference in measurements (120, 150) of current at least between a single probe (11, 12) of the first double probe (1) and a single probe (21, 22) of the second double probe (2).

8. The method (300) according to any one of claims 2 to 7, wherein the physical properties of each fluid f, f' comprise thermal capacity and optionally density, thermal conductivity and dynamic viscosity.

9. The method (300) according to any one of claims 2 to 8, wherein the geometric parameters of the heat exchanger comprise a heat exchange surface comprised between the heights $h_1$ and $h_2$ and optionally a hydraulic diameter and three parameters a, b and c depending on the geometry of the heat exchanger.

10. The method (300) according to any one of claims 2 to 9, wherein the calculation step (330) comprises at least one of calculating the flow rate of the fluid f and calculating the flow rate of the fluid f' according to the previously determined operating conditions (310, 320), of a heat exchange surface comprised between the heights $h_1$ and $h_2$ and the respective one of the heat capacity of the fluid f and the heat capacity of the fluid f'.

11. The method (300) according to any one of claims 2 to 10, wherein the calculation step (330) comprises calculating at least one of the convection resistance Rcv on the first side of the wall (40) and the convection resistance R'cv on the second side of the wall (40) according to:

   - previously determined operating conditions (310, 320),
   - a heat exchange surface between the heights $h_1$ and $h_2$, a hydraulic diameter and three parameters a, b and c depending on the geometry of the heat exchanger, and
   - the density, heat capacity, thermal conductivity and dynamic viscosity of a respective fluid f and f'.

12. The method (300) according to the preceding claim, wherein the calculation step (330) comprises calculating at least one of the fouling resistance Re on the first side of the wall (40) and the fouling resistance R'e on the second side of the wall (40), according to the respective one of the convection resistance Rcv on the first side of the wall (40) and the convection resistance R'cv on the second side of the wall (40).

13. The method (100) according to one of claims 2 to 12, wherein the first and second determination steps (310, 320) and the calculation step (330) are repeated, so that the exceeding of a threshold value predetermined by at least one of:

   - a difference between the flow rates of the fluid f,
   - a difference between the flow rates of the fluid f',
   - a difference between convection resistances Rcv,
   - a difference between convection resistances R'cv,
   - a difference between fouling resistances Re, and
   - a difference between fouling resistances R'e,

   is representative of a change in the operating conditions of the heat exchanger and, where appropriate, allows a decision to be taken as to the performance of an operation to repair or replace the wall (40), or even the heat exchanger.

14. A computer program product comprising instructions which, when interpreted and executed by at least one processor which controls a system according to claim 1, perform at least the first and second determination steps (310, 320) and the calculation step (330) of the method (300) according to any one of claims 2 to 13.

←— 111,121,211,221

FIG. 1

←— 11,12,21,22

111,121,211,221

113,123,
213,223

FIG. 2

11,21

111,211

113,213

13,23

12,22

121,221

123,223

FIG. 3

1,2

11,21
13,23
12,22

FIG. 4

1,2

11,21
13,23
12,22

112,212,122,222

20    10

FIG. 5

FIG. 6

FIG. 7

FIG. 8

310,320

110

Alimenter différemment les circuits résistifs des mono-sondes de chacune parmi des première et deuxième bi-sondes disposées sur la paroi d'un échangeur thermique à travers laquelle s'opère un transfert de chaleur entre deux fluides f et f', à des hauteurs $h_1$ et $h_2$ de circulation différentes

120

Mesurer la tension aux bornes de chaque circuit résistif des mono-sondes de chacune des deux bi-sondes

130

En déduire les températures T11(t1) et T12(t1) des mono-sondes de la première bi-sonde et les températures T21(t1) et T22(t1) des mono-sondes de la deuxième bi-sonde

140

Alimenter à nouveau différemment les circuits résistifs des mono-sondes de chacune des deux bi-sondes

150

Mesurer à nouveau la tension aux bornes de chaque circuit résistif des mono-sondes de chacune des deux bi-sondes

160

En déduire les températures T11(t2) et T12(t2) des mono-sondes de la première bi-sonde et les températures T21(t2) et T22(t2) des mono-sondes de la deuxième bi-sonde

170, 180

Calculer les températures $Tf_1$ et $Tf'_1$ des fluides f et f' à la première hauteur $h_1$ de circulation, les température $Tf_2$ et $Tf'_2$ des fluides f et f' à la deuxième hauteur $h_2$ de circulation et les résistances thermiques R et R' de chaque côté de la paroi en fonction de T11(t1), T12(t1), T11(t2), T12(t2), T21(t1), T22(t1), T21(t2) et T22(t2)

FIG. 9

300

```
┌──────────────────────────────────────────────────────┐ ╶310
│ Déterminer, à l'aide d'une première bi-sonde disposée sur │
│ une paroi d'un échangeur thermique à une première │
│ hauteur $h_1$ : les températures $Tf_1$ et $Tf'_1$ des fluides f et f' │
│ de part et d'autre de la paroi, à la première hauteur $h_1$ de │
│ circulation des fluides │
└──────────────────────────────────────────────────────┘
```

```
┌──────────────────────────────────────────────────────┐ ╶320
│ Déterminer, à l'aide d'une deuxième bi-sonde disposée │
│ sur la paroi à une deuxième hauteur $h_2$ : les températures │
│ $Tf_2$ et $Tf'_2$ des fluides f et f' et les résistances thermiques │
│ $R_2$ et $R'_2$ de part et d'autre de la paroi, à la deuxième │
│ hauteur $h_2$ de circulation des fluides │
└──────────────────────────────────────────────────────┘
```

```
┌──────────────────────────────────────────────────────┐ ╶330
│ Calculer en fonction des résultats des étapes précédentes, │
│ de paramètres géométriques de l'échangeur thermique et │
│ de propriétés physiques des fluides f et f', l'une parmi les │
│ conditions de fonctionnement suivantes : des débits des │
│ fluides f et f', des résistances de convection Rcv et R'cv et │
│ des résistances d'encrassement Re et R'e, de part et │
│ d'autre de la paroi │
└──────────────────────────────────────────────────────┘
```

FIG. 10

**EP 3 339 836 B1**

**Documents brevets cités dans la description**

- WO 0194876 A1
- WO 2007099240 A1
- WO 2009153323 A1